(19) **Europäisches Patentamt / European Patent Office / Office européen des brevets**

(11) **EP 4 738 206 A1**

(12) **EUROPEAN PATENT APPLICATION**
published in accordance with Art. 153(4) EPC

(43) Date of publication:
06.05.2026 Bulletin 2026/19

(21) Application number: 24848614.4

(22) Date of filing: 23.04.2024

(51) International Patent Classification (IPC):
*G06N 10/60* (2022.01)

(52) Cooperative Patent Classification (CPC):
G06N 10/60

(86) International application number:
PCT/JP2024/015812

(87) International publication number:
WO 2025/027953 (06.02.2025 Gazette 2025/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 03.08.2023 JP 2023127421

(71) Applicants:
• Quemix Inc.
Tokyo 1030027 (JP)

• INSTITUTE OF SCIENCE TOKYO
Tokyo 152-8550 (JP)

(72) Inventors:
• NISHI, Hirofumi
Tokyo 103-0027 (JP)
• KOSUGI, Taichi
Tokyo 103-0027 (JP)
• MATSUSHITA, Yuichiro
Tokyo 152-8550 (JP)

(74) Representative: Winter, Brandl - Partnerschaft mbB
Alois-Steinecker-Straße 22
85354 Freising (DE)

(54) **INFORMATION PROCESSING METHOD, INFORMATION PROCESSING SYSTEM, CALCULATION QUANTUM CIRCUIT, METHOD FOR GENERATING CALCULATION QUANTUM CIRCUIT, AND PROGRAM**

(57) One aspect of the present invention provides an information processing method. The information processing method includes the following steps. In an acquisition step, information related to an input state that is represented by n calculation quantum bits, information related to a Hamiltonian, and the number K of repetitions (K is an integer of 2 or more) of an operation that is based on the Hamiltonian are acquired. In an allocation step, plurality of auxiliary bits are allocated in accordance with the number K of repetitions. The states of the n calculation quantum bits and the plurality of auxiliary bits are configured to be expressable with use of at least a first state and a second state which are observable. In a generation step, a calculation quantum circuit is generated on the basis of the acquisition result in the acquisition step. The calculation quantum circuit is configured to cause a first reflection operation, a first operation quantum circuit, a second reflection operation, and a second operation quantum circuit to act in this order. The first reflection operation is configured to act on the plurality of auxiliary bits so as to change the phase of a first reflection state, which is one of a first state component and a second state component included in the plurality of auxiliary bits. The first operation quantum circuit is configured to act on n calculation quantum bits corresponding to an input state, and includes unit gate operations corresponding to the auxiliary bits. The unit gate operations are each configured such that one of a plurality of differing auxiliary bits is a control bit, a calculation quantum bit is a target bit, and the mode of acting on the calculation quantum bit is changed in accordance with the state of an auxiliary bit. The second reflection operation is configured to act on a calculation quantum bit and an auxiliary bit so as to change the phase of a second reflection state, which is one of a first state component and a second state component included in the calculation quantum bit and the auxiliary bit. The second operation quantum circuit is configured to enable conversion into a Hermite-coupled circuit of the first operation quantum circuit using a prescribed unitary gate operation.

EP 4 738 206 A1

FIG. 7

**Description**

BACKGROUND

The present disclosure relates to an information processing method, a computational quantum circuit, a generation method of a computational quantum circuit according to claim 10, an information processing system, and a program.

RELATED ART

Quantum information processing using quantum mechanics for information processing has been proposed. Furthermore, many studies have been conducted on quantum computers based on such quantum information processing. For example, Patent Document 1 discloses a conventional technique for quantum information processing. Non-patent document is a reference document.

PRIOR ART DOCUMENTS

Patent document

[Patent Document 1] JP2015-135377 A

[Non-Patent Document]

[Non-Patent Document 1] H. Nishi, K. Hamada, Y. Nishiya, T. Kosugi, and Y. ichiro Matsushita, Analyzing computational cost of probabilistic imaginary-time evolution method (2023), arXiv:2305.04600 [quant-ph].

SUMMARY

Problems to be solved by invention

By the way, there is still room for improvement in a technique for acquiring a desired state such as a ground state of a certain Hamiltonian.

Means for solving problems

According to one aspect of the present disclosure, an information processing method is provided. The information processing method includes the following steps. In an acquisition step, information related to an input state represented by n computational qubits, information related to a Hamiltonian, and a number of repetitions K of an operation based on the Hamiltonian are acquired, and the K is an integer of 2 or more. In an assignment step, a plurality of ancillary bits are assigned depending on the number of repetitions K. Here, each state of the n computational qubits and the ancillary bits is configured to be represented by using at least a first state and a second state which are observable. In a generation step, a computational quantum circuit is generated based on an acquisition result obtained in the acquisition step. The computational quantum circuit is configured to allow a first reflection operation, a first operational quantum circuit, a second reflection operation, and a second operational quantum circuit to sequentially act. The first reflection operation is configured to act on the ancillary bits so as to change a phase of a first reflection state, which is one of components of the first state or the second state included in each of the ancillary bits. The first operational quantum circuit is configured to act on the n computational qubits corresponding to the input state and includes unitary gate operations corresponding respectively to the ancillary bits. Each of the unitary gate operations is configured to use one of the different ancillary bits as a control bit and the computational qubits as target bits, and to change a mode of action on the computational qubits depending on a state of the ancillary bits. The second reflection operation is configured to act on the computational qubits and the ancillary bits so as to change a phase of a second reflection state, which is one of components of the first state or the second state included in each of the computational qubits and the ancillary bits. The second operational quantum circuit is configured to be converted into a Hermitian conjugate circuit of the first operational quantum circuit by using a predetermined unitary gate operation.

Accordingly, it is possible to provide a quantum algorithm that can more efficiently obtain a desired state.

BRIEF DESCRIPTION OF DRAWINGS

[FIG. 1] FIG. 1 is a configuration diagram representing an information processing system 1.
[FIG. 2] FIG. 2 is a block diagram showing a hardware configuration of an information processing apparatus 2.
[FIG. 3] FIG. 3 is a block diagram showing a hardware configuration of a quantum computer 3.
[FIG. 4] FIG. 4 is a block diagram showing a hardware configuration of a user terminal 4.
[FIG. 5] FIG. 5 is a block diagram showing a functional structure of a processor 23.
[FIG. 6] FIG. 6 is a diagram illustrating an example of a quantum circuit QC1 of a probabilistic algorithm for preparing a ground state of a Hamiltonian.
[FIG. 7] FIG. 7 is a diagram illustrating an example of a computational quantum circuit 5.
[FIG. 8] FIG. 8 is a diagram illustrating an example of $V_{RTE}$.
[FIG. 9] FIG. 9 is a diagram illustrating a modified example of $V_{RTE}$.
[FIG. 10] FIG. 10 is a flowchart illustrating an overview of the information processing executed in the information processing system 1.
[FIG. 11] FIG. 11 is a diagram showing simulation results of the relationship between the computational cost and the infidelity $\delta_K$ in each method for generating a ground state of the Hamiltonian H.
[FIG. 12] FIG. 12 is a diagram showing simulation results of the relationship between the weight $|c_1|^{-1}$ of the probability of the ground state of the input state $|\psi>$, obtained using each method, and the computational cost.
[FIG. 13] FIG. 13 is a quantum circuit for implementing a time-evolution operator $\exp(L\Delta t)$ with a general operator L as a generator.
[FIG. 14] FIG. 14 is a quantum circuit for implementing an imaginary-time evolution operator $\exp(-H\Delta\tau)$ with a general Hermitian operator H as a generator.
[FIG. 15] FIG. 15 shows an example of a quantum circuit QC2 corresponding to a cosine function operator $\cos(t_k H)$.
[FIG. 16] FIG. 16 is a diagram illustrating an example of a computational quantum circuit in a case where the cosine function operator $\cos(t_k H)$ is adopted as a probabilistic operation.

DETAILED DESCRIPTION

An embodiment of the present disclosure will hereinafter be described with reference to the drawings. Various features described according to the embodiment below can be combined with each other.
A program for implementing software described in the present embodiment may be provided as a non-transitory computer-readable storage medium, may be made available for download from an external server, or may be provided in such a manner that the program can be activated on an external computer to implement functions thereof on a client terminal (so-called cloud computing).
In the present embodiment, the term "unit" may also include, for example, a combination of hardware resources implemented by a circuit in a broad sense, and information processing performed by software that may be specifically implemented by such hardware resources. Furthermore, various kinds of information are handled in the present embodiment, and such information may be represented by, for example, physical values of signal values representing voltage and current, high and low signal values as a set of binary bits consisting of 0 or 1, or quantum superposition (so-called qubits), and communication and computation may be executed on a circuit in a broad sense.
Furthermore, the term "circuit in a broad sense" refers to a circuit that is implemented by appropriately combining at least one or more of a circuit, circuitry, a processor, memory, and the like. In other words, the term "circuit in a broad sense" includes an application specific integrated circuit (ASIC), a programmable logic device (e.g., a simple programmable logic device (SPLD), a complex programmable logic device (CPLD), a field programmable gate array (FPGA)), and the like.

1. Hardware configuration

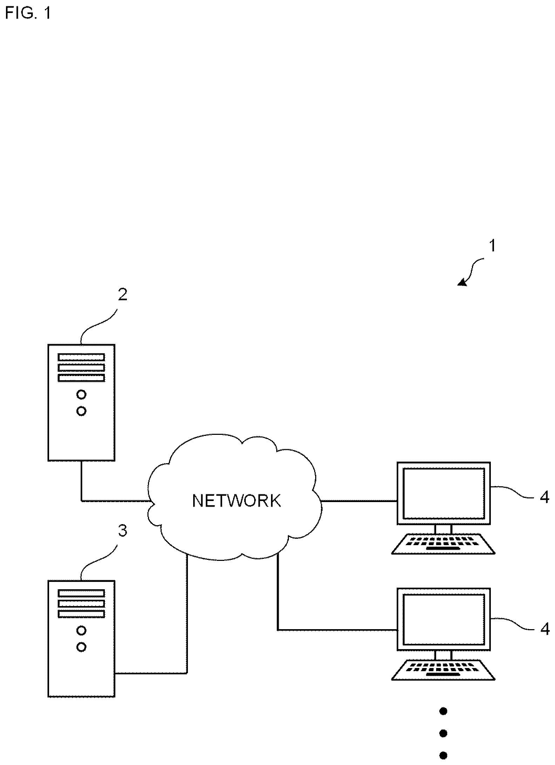

This section describes a hardware configuration of the information processing system 1 according to the present embodiment. <Information processing system 1>
FIG. 1 is a configuration diagram representing an information processing system 1. The information processing system 1 includes an information processing apparatus 2, at least one quantum computer 3, and a user terminal 4. The information processing apparatus 2, the quantum computer 3, and the user terminal 4 are configured to communicate via telecommunication lines. In one embodiment, the information processing system 1 is composed of one or more devices or components. If, for example, the information processing system 1 is composed only of the information processing apparatus 2, the information processing system 1 can be the information processing apparatus 2. Hereinafter, explanation of these components will be provided.

<Information processing apparatus 2>

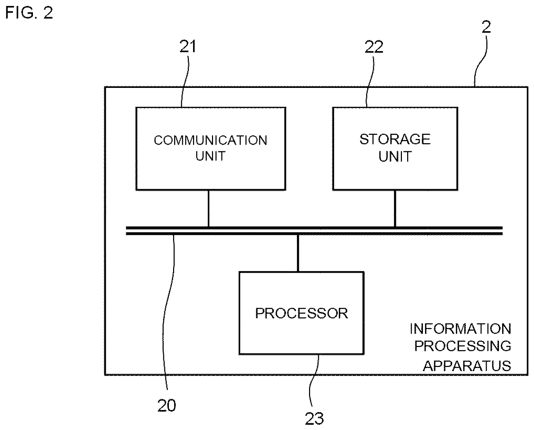

FIG. 2 is a block diagram showing a hardware configuration of the information processing apparatus 2. The information processing apparatus 2 includes a communication unit 21, a storage unit 22 and a processor 23, and these components are electrically connected via a communication bus 20 inside the information processing apparatus 2. Each of the components will be further described below.

<Communication unit 21>

It is preferable for the communication unit 21 to include wired communication means such as USB, IEEE 1394, Thunderbolt (registered trademark), and wired LAN network communication. The communication unit 21 may also include wireless LAN network communication, mobile communication such as 3G/LTE/5G, and BLUETOOTH (registered trademark) communication as necessary. That is, it is more preferable to implement the communication unit 21 as a set of these multiple types of communication means. In other words, the information processing apparatus 2 may communicate various types of information with an external device via the communication unit 21 and a network.

<Storage unit 22>

The storage unit 22 stores the above-defined various kinds of information. The storage unit 22 may be implemented, for example, as a storage device such as a solid state drive (SSD) storing various programs, etc. pertaining to the information processing apparatus 2 and executed by the processor 23, or as a memory such as a random access memory (RAM) storing temporarily necessary information (arguments, arrays, or the like) pertaining to program operations. The storage unit 22 stores various programs, variables, etc. pertaining to the information processing apparatus 2 and executed by the processor 23.

<Processor 23>

The processor 23 processes and controls overall operation pertaining to the information processing apparatus 2. The processor 23 is, for example, an unshown central processing unit (CPU). The processor 23 implements various functions pertaining to the information processing apparatus 2 by reading a predetermined program stored in the storage unit 22. In other words, information processing by software stored in the storage unit 22 can be executed as each function execution unit included in the processor 23 by specifically realized through the processor 23, that is an example of hardware. These are described in more detail in the next section. The processor 23 is not limited to being a single unit, and may be implemented with multiple processors 23 for the individual functions. Moreover, a combination thereof may also be acceptable.

<Quantum computer 3>

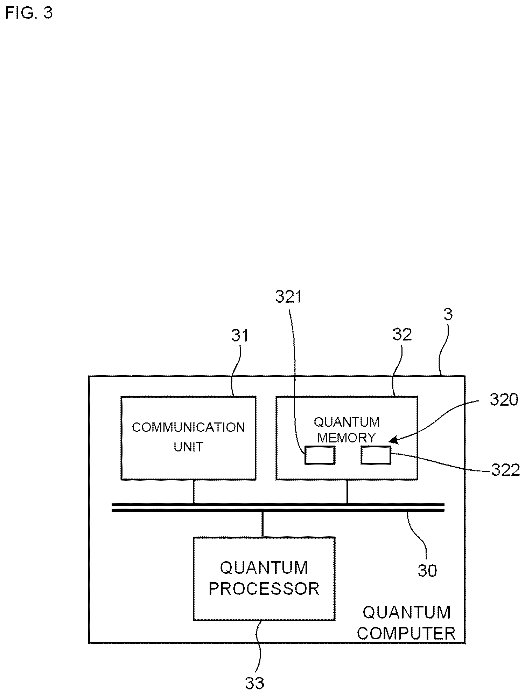

FIG. 3 is a block diagram showing a hardware configuration of the quantum computer 3. As shown in FIG. 3, the quantum computer 3 includes a communication unit 31, a quantum memory 32, and a quantum processor 33, and these components are connected inside the quantum computer 3 via a communication bus 30. The quantum computer 3 may include a fault tolerant quantum computer, a NISQ device, or both. The quantum computer 3 in the present embodiment is a gate-type. Each component is further described below.

<Communication unit 31>

The communication unit 31 is used by the quantum computer 3 to communicate information with other information processing apparatus (including classical computers, quantum computers or combinations thereof) or peripheral devices.

<Quantum memory32>

The quantum memory 32 stores various kinds of information as defined in the foregoing description. In particular, the quantum memory 32 stores various programs that can be read by the quantum processor 33, which is described next. The quantum memory 32 also stores, as necessary, physical property information or the like of a specific material pertaining to the calculations performed by the quantum computer 3. The quantum memory 32 includes a plurality of qubits 320. The qubits 320 can be implemented in any manner, including nuclear spins, photons, ions, atoms, quantum dots, and superconducting Josephson devices. The qubits 320 include computational qubits 321 and ancillary bits 322. Note that the quantum memory 32 may also include a classical memory device.

The qubits 320 can be in any state within a state space represented by at least two basis vectors. Each state of the qubits 320 in the present embodiment is represented by a superposition of a basis vector $|1>$ representing a first state and a basis vector $|0>$ representing a second state. Each of the basis vectors $|0>$ and $|1>$ is configured to be observable. For convenience, the qubits 320 include computational qubits 321 and ancillary bits 322. In other words, each state of the n computational qubits 321 and the K ancillary bits 322 is configured to be represented by using at least the first state $|0>$ and the second state $|1>$ which are observable.

<Quantum processor 33>

The quantum processor 33 processes and controls the overall operation related to the quantum computer 3. The quantum processor 33 realizes various functions related to the quantum computer 3 by reading the program stored in the quantum memory 32 or the predetermined program that is input via the communication unit 31. In FIG. 3, a single quantum processor 33 is shown, but in practice, it is not limited thereto, and it may be implemented to have multiple quantum processors 33 for each function. Moreover, a combination thereof may also be acceptable.

The quantum processor 33 is configured to perform various quantum operations on the qubits 320 that can be implemented on a quantum circuit. For example, a quantum circuit is configured to specify a series of quantum operations on the qubits 320. Quantum operations include, for example, quantum gate operations and observation operations. Quantum gate operations correspond to unitary operations on the quantum state of the qubits 320. Observation operations correspond to projection operations on the quantum state of the qubits 320. That is, the quantum circuit such as a computational quantum circuit 5 described later can be regarded as a type of program that causes the quantum computer 3 to execute a series of quantum operations.

<User terminal 4>

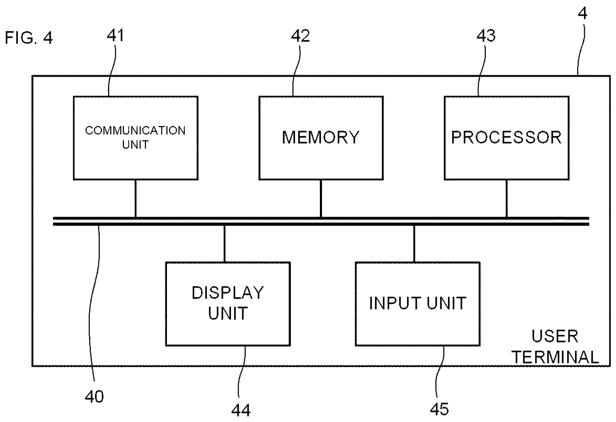

Next, the hardware configuration of the user terminal 4 is described. FIG. 4 is a block diagram showing a hardware configuration of the user terminal 4. The user terminal 4 includes a communication unit 41, a memory 42, a processor 43, a display unit 44, and an input unit 45, and these components are electrically connected inside the user terminal 4 via a communication bus 40. The description of the communication unit 41, the memory 42 and the processor 43 is the same as the description of each part in the information processing apparatus 2 and is therefore omitted.

<Display unit 44>

The display unit 44 may be included in a housing of the user terminal 4, or may be attached thereto externally. The display unit 44 displays a screen of a graphical user interface (GUI) that can be operated by a user. For example, this displaying is preferably implemented by using different display devices, such as a CRT display, a liquid crystal display, an organic EL display, or a plasma display, depending on the type of the user terminal 4.

<Input unit 45>

The input unit 45 may be included in the housing of the user terminal 4 or may be attached thereto externally. For example, the input unit 45 may be implemented as a touchscreen integrated with the display unit 44. If it is a touchscreen, the user can input operations such as tapping, swiping, and the like. Of course, instead of a touchscreen, switch buttons, a mouse, a QWERTY keyboard and the like may be adopted. In other words, the input unit 45 receives an operation input performed by the user. This input is transferred as an instruction signal to the processor 43 via the communication bus 40, and the processor 43 may perform predetermined control or computation as needed.

2. Functional configuration of processor 23

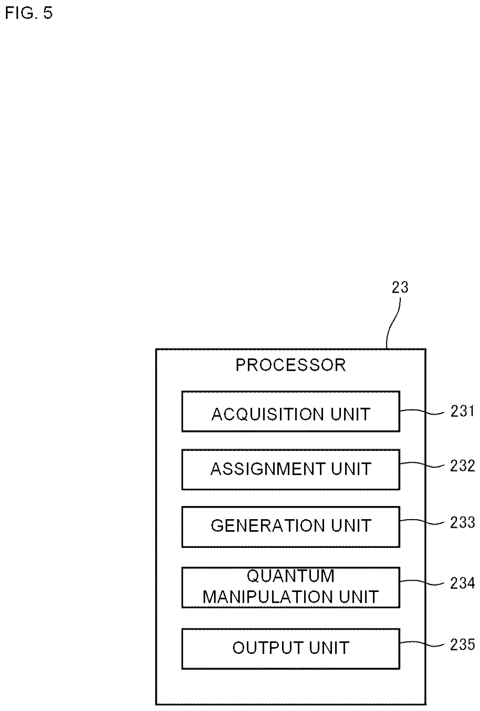

This section describes a functional configuration of the processor 23 of the information processing apparatus 2 according to the present disclosure. FIG. 5 is a block diagram showing the functional structure of the processor 23. The processor 23 includes an acquisition unit 231, an assignment unit 232, a generation unit 233, a quantum manipulation unit 234, and an output unit 235.

<Acquisition unit 231>

The acquisition unit 231 is configured to acquire, as an acquisition step, various types of information on quantum computation from the quantum computer 3 and the user terminal 4. The acquisition unit 231 is configured to acquire various types of information by reading various types of information stored in the storage area, which is at least a part of the storage unit 22, and writing the read information into the work area, which is at least a part of the storage unit 22. The storage area is, for example, an area of the storage unit 22 that is implemented as a storage device such as SSD. The work area is an area that is implemented as a memory, for example, RAM.

<Assignment unit 232>

The assignment unit 232 is configured to assign, as an assignment step, at least a part of the qubits 320 as the computational qubits 321 and the ancillary bits 322.

<Generation unit 233>

The generation unit 233 is configured to generate various types of information such as a quantum circuit, including the computational quantum circuit 5, based on the acquired information and the like. The quantum circuit, such as the computational quantum circuit 5, is a set of instructions relating to a series of quantum operations to be performed by the quantum processor 33 on the qubits 320, and is a type of program. Details of the computational quantum circuit 5 will be described later.

<Quantum manipulation unit 234>

The quantum manipulation unit 234 is configured to perform various quantum operations on the qubits 320. For example, the quantum manipulation unit 234 causes the quantum processor 33 to execute a series of quantum operations on the qubits 320 based on the computational quantum circuit 5 generated by the generation unit 233. The quantum manipulation unit 234 may be configured to directly perform quantum operations on the qubits 320 or to transmit an instruction to the quantum processor 33 to perform quantum operations. The quantum manipulation unit 234 of the present embodiment causes the quantum processor 33 to perform quantum operations by transmitting various quantum circuits, such as the computational quantum circuit 5 described later, to the quantum processor 33.

<Output unit 235>

The output unit 235 is configured to output, as an output step, a calculation result obtained through the quantum operations performed by the quantum manipulation unit 234, for example, a state of the computational qubits 321 on which the quantum circuit has been operated.

3. Theory

This section provides an overview of the theory related to the present information processing.

3.1 Quantum algorithm for obtaining a desired state

Here, as an operation, a discussion is made on a non-unitary operation f(H) based on a Hamiltonian H in a system composed of n computational qubits 321. The non-unitary operation f(H) is incorporated into the following extended unitary matrix U by introducing one ancillary bit 322.
[Equation 1]

$$\mathcal{U} \equiv \begin{pmatrix} f(\mathcal{H}) & \sqrt{1 - f^2(\mathcal{H})} \\ \sqrt{1 - f^2(\mathcal{H})} & -f(\mathcal{H}), \end{pmatrix} \qquad (1)$$

Here, the non-unitary matrix U is represented as a submatrix related to a desired state and a state orthogonal thereto. The desired state is, for example, a state in which the ancillary bit 322 is observed in the |0> state. The state orthogonal thereto is, for example, a state observed in the |1> state. When an input state |ψ>*|0> is input, the following state is derived by the action of the unitary matrix U. In the present specification, the operation symbol "*" represents a Kronecker product, in principle.

[Equation 2]

$$f(\mathcal{H})|\psi\rangle \otimes |0\rangle + \sqrt{1 - f^2(\mathcal{H})}|\psi\rangle \otimes |1\rangle. \qquad (2)$$

Any unitary matrix U can be decomposed at least to a first order of the Hamiltonian H, and can be implemented by using a forward real-time evolution operator $U_{RTE}$, a backward real-time evolution operator $U_{RTE}{}^\dagger$, and a single-qubit gate operation.

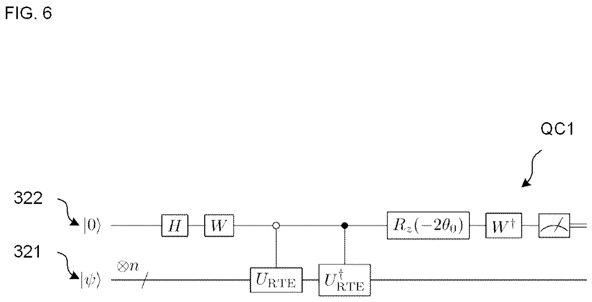

FIG. 6 is a diagram illustrating an example of a quantum circuit QC1 of a probabilistic algorithm for preparing a ground state of a Hamiltonian. The quantum circuit QC1 of the present embodiment is configured to act on an n+1 qubit system composed of n computational qubits 321 and one ancillary bit 322. An initial state of the n qubit system is a predetermined input state $|\psi\rangle$, and an initial state of the ancillary bit 322 is the $|0\rangle$ state. The quantum circuit QC1 first generates an ancillary bit 322 that takes a superposed state of the $|0\rangle$ state and the $|1\rangle$ state by performing a predetermined unitary operation (for example, a Hadamard gate operation and a W gate operation) on the ancillary bit 322. Subsequently, the quantum circuit QC1 performs a different operation on the input state $|\psi\rangle$ depending on the state of the ancillary bit 322. For example, the quantum circuit QC1 is configured to allow a forward real-time evolution operator $U_{RTE}$ to act on the input state $|\psi\rangle$ when the ancillary bit 322 is in the $|0\rangle$ state, and to allow a backward real-time evolution operator $U_{RTE}{}^\dagger$ to act on the input state $|\psi\rangle$ when the ancillary bit 322 is in the $|1\rangle$ state. Such an operation can be implemented, for example, by using a control gate operation in which the ancillary bit 322 serves as a control bit and the n computational qubits 321 serve as target bits. Subsequently, the quantum circuit QC1 is configured to perform another predetermined unitary operation (for example, a W gate operation, which is defined later in Equation 24) on the ancillary bit 322, and then perform an observation operation on the ancillary bit 322. In this manner, a quantum operation that probabilistically changes the operation mode when performing a certain operation may be referred to as a probabilistic quantum operation. When the ancillary bit 322 is observed in the $|0\rangle$ state, the state of the computational qubits 321 can become a state in which f(H) has acted on the input state $|\psi\rangle$. Accordingly, by using the quantum circuit QC1, it is possible to extract a state in which f(H) has successfully acted on the input state $|\psi\rangle$.

When the unitary operation U is executed multiple times, the unitary operation U includes various parameters such as a magnitude $\Delta\tau$ of an imaginary-time step. These parameters can be arbitrarily selected at each step in which the unitary operation U is executed. Hereinafter, for convenience of explanation, the unitary operation U at the k-th step may be referred to as $U_k$. When K ancillary bits are used, and different ancillary bits 322 are assigned respectively to each $U_k$, and the unitary operations $U_k$ are sequentially executed for k = 1 to K without observing the ancillary bits 322, the input state $|\psi\rangle$ and the states $|0\rangle^{*K}$ of the K ancillary bits 322 change as follows.

[Equation 3]

$$F_K(\mathcal{H})|\psi\rangle \otimes |0\rangle^{\otimes K} + (\text{other states}). \qquad (3)$$

$F_k(H)$ is an operator that allows $f_k(H)$ to sequentially act, and is expressed as follows.

[Equation 4]

$$F_K(\mathcal{H}) \equiv \prod_{k=1}^{K} f_k(\mathcal{H}).$$

Observation of the k-th ancillary bit 322 in the $|0\rangle$ state indicates that the operation of $f_k(H)$ has been successfully performed. Accordingly, the $|0\rangle$ state in the ancillary bit 322 represents a success state in which $f_k(H)$ has successfully acted on the qubit system composed of the computational qubits 321. Hereinafter, for convenience of explanation, the $|0\rangle$ state of the ancillary bit 322 may be referred to as a success state. After performing observation and initialization of the ancillary bit 322 used in the previous step, the initialized ancillary bit 322 may be reused, thereby allowing such repeated processing to be executed with a smaller number of ancillary bits 322. Examples of $f_k(H)$ include, for instance, an approximate imaginary-time evolution operator $\exp(-\Delta\tau_k H)$ and a cosine function operator $\cos(\tau_k H)$. The $\tau_k$ represents a time step width for real-time evolution. By using such a quantum circuit QC1, the state of the computational qubits 321 can be guided to an energy eigenstate of the Hamiltonian H, and a desired state corresponding to a problem to be solved can be obtained by using the computational qubits 321. The desired state of the computational qubits 321 is, for example, a ground state when solving a problem of obtaining the lowest energy or ground state of the Hamiltonian H. In this case, by repeatedly allowing the operation $f_k(H)$ to act, it is possible to damp the components of the state other than the desired states included in the computational qubits 321 (hereinafter, for convenience of explanation, referred to as undesired states). The undesired states include, for example, excited states. Such quantum information processing can also be utilized as a method of representing a damping function having a peak at a certain state. The certain state may be, for example, an eigenstate of the Hamiltonian H, and may be either a ground state or an excited state other than the ground state (for example, a first excited state).

By observing all of the K ancillary bits 322 in the |0> state, the entangled wave function converges to the following state.

[Equation 5]

$$|\Psi_K\rangle = \frac{1}{\sqrt{P_K}} F_K(\mathcal{H})|\psi\rangle, \qquad (4)$$

$P_K$ represents the total success probability. The total success probability refers to the probability that the ancillary bit 322 is observed in the | 0> state in all steps of k = 1 to K. The input state |ψ> can be expanded as follows by using the i-th eigenstate |$\lambda_i$> of the Hamiltonian H.

[Equation 6]

$$|\psi\rangle = \sum_{i=1}^{N} c_i |\lambda_i\rangle$$

$c_i$ is an expansion coefficient of the i-th eigenstate |$\lambda_i$>. Here, for convenience of explanation, each eigenstate is treated as being non-degenerate. However, the same discussion applies even when a degenerate eigenstate is present. In addition, for convenience of explanation, the eigenstates |$\lambda_i$> are assumed to be arranged in ascending order with respect to their energy eigenvalues.

When $F_K(H)$ is configured to damp undesired states, the total success probability $P_K$ is expressed as follows.

[Equation 7]

$$P_K = \frac{1}{1 - \delta_K} |c_1|^2, \qquad (5)$$

$\delta_K$ is an infidelity representing calculation accuracy, and is expressed as follows.

[Equation 8]

$$\delta_K = 1 - |\langle \lambda_1 | \Psi_K \rangle|^2$$

Here, for convenience of explanation, $F_K(\lambda_1) = 1$ is assumed. Such $F_K$ can be realized, for example, by performing a constant energy shift in a probabilistic imaginary-time evolution method. The energy shift is a method for improving the total success probability through quantum amplitude amplification by shifting the rotation angle $2\theta_k$ of the $R_z$ gate operation included in an input transformation operation 521 and an output transformation operation 543, described later, to $2(\theta_k + \Delta\tau_k s_k E_k)$ using a predetermined energy value $E_k$ and a parameter $s_k$ introduced in the approximation of the probabilistic imaginary-time evolution operator. See Non-Patent Document 1 for details of the energy shift. A quantum algorithm that damps undesired states to reduce the amount of infidelity $\delta_K$ caused by the non-unitary operation $f_k(H)$ scales the total success probability $P_K$ as $O(|c_1|^2)$. This scaling of the total success probability $P_K$ holds regardless of the type of the non-unitary operation $f_k(H)$, the number of ancillary bits 322, or the quantum circuit used to implement the non-unitary operation $f_k(H)$. For example, when an approximate ground state is unknown, such as in the case of $|c_i|^2 = 1/N$, the computational cost of successfully allowing at least one of the non-unitary operations {$f_k(H)$} to act on the input state |ψ> scales as $O(N)$. Such a tendency is observed particularly in so-called probabilistic operations, where the acting of the non-unitary operation $f(H)$ on the computational qubits 321 succeeds probabilistically depending on the state of the ancillary bit 322. In other words, the operation is a probabilistic operation configured to represent whether or not the operation succeeds depending on the state of the ancillary bit 322.

When the above probabilistic method is used with a CRTE gate (controlled real-time evolution gate), the computational cost remains polynomial, and quantum acceleration can be effectively promoted. For example, the circuit depth $d_{CRTE}$ required for the CRTE gate in a $n_e$-electron system based on a first-quantized Hamiltonian scales on the order of the following.

[Equation 9]

$$d_{\text{CRTE}} = \mathcal{O}\left(n_e^2 \,\text{poly}\left(\log(n_e^{1/3}/\Delta x)\right)\right)$$

Here, $\Delta x$ represents the spacing of the discretized spatial grid. The computational cost in this case is expressed as follows.

[Equation 10]

$$\frac{d_{\text{CRTE}}K}{P_K} = \mathcal{O}\left(\frac{d_{\text{CRTE}}}{|c_1|^2}\ln\left(\frac{(1-\delta_K)(1-|c_1|^2)}{\delta_K|c_1|^2}\right)\right), \quad (6)$$

3.2 Combination method of multistep scheme related to a probabilistic algorithm and quantum amplitude amplification (QAA)

As a method for achieving further quantum acceleration in the above-described operations (particularly probabilistic operations), it is possible, for example, to improve the observation probability of a success state by quantum amplitude amplification. This section describes a combination method of a multistep scheme related to a probabilistic algorithm for obtaining a ground state of the Hamiltonian H and quantum amplitude amplification (QAA). The following method is not limited to obtaining a ground state, and can also be appropriately used to obtain any state, such as an eigenstate other than the ground state or a superposed state thereof. Furthermore, the following method is not limited to operations corresponding to probabilistic algorithms, and can be applied to operations corresponding to any algorithm.

The multistep scheme is a method in which an operation based on the Hamiltonian H is repeatedly performed a predetermined number of times. In the following description, the number of repetitions of the operation is denoted as K. In this case, the number of ancillary bits 322 corresponding to the number of repetitions K are used. The number of ancillary bits 322 used for quantum amplitude amplification is arbitrary and may be two or more, or may be greater than or equal to K. Here, the number of ancillary bits 322 is set to K, which is equal to the number of repetitions K. This enables reducing the number of required qubits while suppressing the increase in quantum circuit depth during quantum amplitude amplification. Hereinafter, for convenience of explanation, a case where K ancillary bits 322 are used will be described.

Each ancillary bit 322 is associated with each step of the probabilistic algorithm (operation). After execution of the probabilistic algorithm, an observation operation is configured to be performed on all of the ancillary bits as a final step. An output state $|\widetilde{\Psi}\rangle$ of the (n+K)-qubit system composed of n computational qubits 321 and K ancillary bits 322 before the observation operation is expressed as follows. Here, a is a real number greater than 0 and less than 1.

[Equation 11]

$$|\widetilde{\Psi}\rangle = a|\Psi_{\text{good}}\rangle + \sqrt{1-a}|\Psi_{\text{bad}}\rangle \qquad (7)$$

$$|\Psi_{\text{good}}\rangle = \frac{1}{\sqrt{P_K}}F_k(\mathcal{H})|\psi\rangle \otimes |0\rangle^{\otimes K} \qquad (8)$$

In addition, $|\Psi_{\text{bad}}\rangle$ is a state orthogonal to $|\Psi_{\text{good}}\rangle$. It should be noted that the terms "good" and "bad" are merely convenient signs, and the states included in $|\Psi_{\text{bad}}\rangle$ can also be used in this algorithm depending on an allowable error. The state $|\Psi_{\text{good}}\rangle$ is an example of a second reflection state, and indicates that the state in which the K operations on the computational qubits 321 have been successfully performed and the state in which all of the ancillary bits 322 take the $|0\rangle$ state are in a separable state.

The quantum amplitude amplification in a certain embodiment can amplify the coefficient of $|\Psi_{\text{good}}\rangle$, which is a desired state, by allowing an amplitude amplification operator to act m times. The amplitude amplification operator is defined as follows.

[Equation 12]

$$\prod_{i=1}^{m} Q(\phi_{2i-1}, \phi_{2i})$$

However, Q($\varphi_{2i}$-1, $\varphi_{2i}$) is defined as follows.
[Equation 13]

$$Q(\phi_{2i-1}, \phi_{2i})$$
$$\equiv -\mathcal{U}_{\text{REF}}^{(K)} S_0^{(n+K)}(\phi_{2i-1}) \left(\mathcal{U}_{\text{REF}}^{(K)}\right)^\dagger S_\chi(\phi_{2i}). \qquad (9)$$

Here, $S_\chi$ is an oracle operation, $S_0$ is a zero reflection operation, and $U_{\text{REF}}^{(K)}$ is defined as follows.

[Equation 14]

$$\mathcal{U}_{\text{REF}}^{(K)}|0\rangle^{\otimes(n+K)} = |\widetilde{\Psi}\rangle.$$

The rotation angles {$\varphi_i$} are each arbitrary, but may be selected, for example, from +$\pi$ or -$\pi$. More preferably, the rotation angles {$\varphi_i$} are determined such that the increase in success probability approximates a sign function. Specifically, they are determined as follows.

[Equation 15]

$$\phi_{2_k} = \alpha_{d-k-1}, \quad \phi_{2k+1} = \alpha_{k+1},$$
$$\alpha_k = -\cot^{-1}\left(\sqrt{1-\gamma^2} \tan \frac{2\pi(k+1)}{L}\right),$$
$$\gamma^{-1} = \frac{\cosh^{-1}(1/\delta)}{\cosh(1/L)}, \quad L = 2m+1$$

In the above equation, $\delta$ represents the calculation accuracy of the success probability, and a smaller $\delta$ is preferable. The smaller the ratio of the success state included in the input state |$\psi$>, the greater the number of repetitions m of the amplitude amplification operator needs to be. In other words, the rotation angle {$\varphi_i$} can be determined based on the number of repetitions m of the amplitude amplification operator.

The zero reflection $S_0^{(n)}(\varphi)$ and the oracle operation $S_\chi(\varphi)$ rotate the output state |$\Psi$> of the (n+K)-qubit system within an effective two-dimensional space having |$\Psi_{\text{good}}$> and |$\Psi_{\text{bad}}$> as basis vectors. The zero reflection $S_0^{(n)}(\varphi)$ and the oracle operation $S_\chi(\varphi)$ are respectively expressed as follows.

[Equation 16]

$$S_0^{(n)}(\phi) = e^{i\phi}|0\rangle\langle 0|^{\otimes n}$$

$$S_\chi(\phi) = S_0^{(K)}(\phi) \otimes I_{2^n}$$

The circuit depth of the zero reflection operation scales on the order of O(n) by introducing a new ancillary bit 322.

3.3 Computational quantum circuit 5

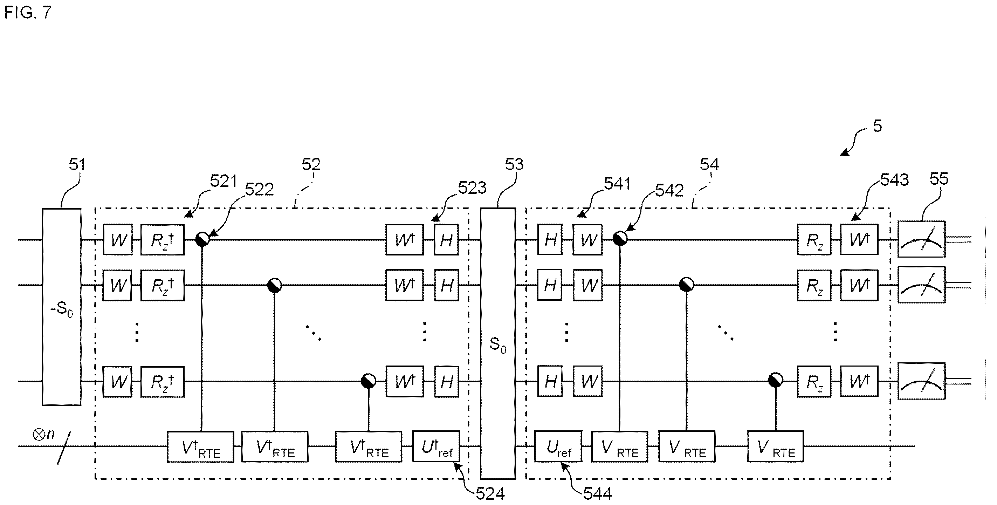

This section describes a computational quantum circuit 5, which serves as a quantum circuit for combining a multistep scheme related to the above-described probabilistic algorithm called a probabilistic imaginary-time evolution method (PITE method), and quantum amplitude amplification (QAA). FIG. 7 is a diagram illustrating an example of the computational quantum circuit 5. The computational quantum circuit 5 of the present embodiment represents Equation (9) as a quantum circuit and functions as an amplitude amplification operator in a probabilistic algorithm for outputting a ground state of a predetermined Hamiltonian H. The probabilistic algorithm in the present embodiment is the probabilistic imaginary-time evolution method (PITE method).

The computational quantum circuit 5 is configured to act on at least one computational qubit 321 and at least K ancillary bits 322. The number of computational qubits 321 can be arbitrarily set depending on the specific mode of computation and is denoted as n herein. The number of ancillary bits 322 is set to K so as to correspond to the number of repetitions K of the operations. Accordingly, the computational quantum circuit 5 is configured to cause the quantum processor 33 to execute, on an (n+K)-qubit system, a series of operations based on the Hamiltonian together with quantum amplitude amplification. The computational quantum circuit 5 is configured to allow a first reflection operation 51, a first operational quantum circuit 52, a second reflection operation 53, and a second operational quantum circuit 54 to sequentially act.

The first reflection operation 51 is configured to act on the plurality of ancillary bits 322 so as to change the phase of a first reflection state, which is one of the components of a first state $|0\rangle$ or a second state $|1\rangle$ included in each of the plurality of ancillary bits 322. The first reflection operation 51 may be configured to act individually on each of the plurality of ancillary bits 322. For example, the first reflection operation 51 inverts the sign of the component of the state of the ancillary bit coupled with $|\Psi_{good}\rangle$ (in the present embodiment, the first state $|0\rangle$) as the first reflection state. The first reflection operation 51 may be configured to rotate, for example, invert, a phase (global phase) of the entire (n+K)-qubit system. The first reflection operation 51 corresponds to the oracle operation $S_x(\varphi_{2i})$ in Equation (9). In the present embodiment, since the $|0\rangle$ state is inverted, the operation can also be regarded as a zero reflection on the ancillary bits 322. In the present embodiment, the rotation angle of the first reflection operation 51 is $\varphi$, and $\varphi_{2i} = \pi$.

The first operational quantum circuit 52 is configured to act on n computational qubits 321 corresponding to the input state $|\psi\rangle$. The input state $|\psi\rangle$ and the qubit states of the K ancillary bits 322 on which the first reflection operation 51 has been performed are input to the first operational quantum circuit 52. The first operational quantum circuit 52 corresponds to $(U_{REF}^{(K)})^\dagger$ in Equation (9). The first operational quantum circuit 52 includes K unitary gate operations 522. The first operational quantum circuit 52 may further include an input transformation operation 521 and an output transformation operation 523.

The input transformation operation 521 is a single-qubit operation configured to act on each ancillary bit 322 and is configured to appropriately superpose the $|0\rangle$ state and the $|1\rangle$ state of each ancillary bit 322. For example, the input transformation operation 521 is configured to allow a W gate operation and a z-rotation gate operation $R_z^\dagger$ to sequentially act. The rotation angle $2\theta_k$ of the z-rotation gate operation $R_z^\dagger$ is expressed, for example, as shown in Equation 23 described later, and may be determined depending on the expansion mode of the non-unitary operator.

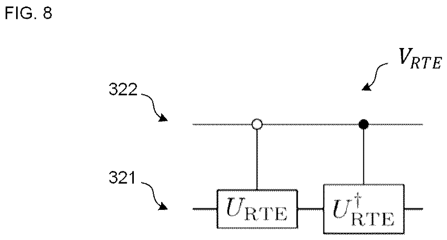

After the input transformation operation 521 is performed on each of the ancillary bits 322, a unitary gate operation 522 is performed for each ancillary bit 322. FIG. 8 is a diagram illustrating an example of $V_{RTE}$. Each of the unitary gate operations 522 of the first operational quantum circuit 52 is configured to use one of a plurality of different ancillary bits 322 as a control bit and the computational qubits 321 as target bits, and to change the mode of action on the computational qubits 321 depending on the state of the ancillary bit 322. In the present embodiment, the unitary gate operation 522 is configured such that either a forward real-time evolution operator $U_{RTE}$ or a backward real-time evolution operator $U_{RTE}^\dagger$ acts depending on the state of the ancillary bit 322, and is denoted as $V_{RTE}^\dagger$ (the Hermitian conjugate of $V_{RTE}$) in FIG. 7. The $V_{RTE}$ is configured such that when the control bit (ancillary bit 322) is in a desired state ($|0\rangle$ state), the forward real-time evolution operator $U_{RTE}$ acts on the control bit (computational qubit 321), and when the control bit (ancillary bit 322) is in an undesired state ($|1\rangle$ state), the forward real-time evolution operator $U_{RTE}$ acts on the control bit (computational qubit 321). The desired state of $V_{RTE}$ is configured to coincide with the reflection state of the reflection operation that acts immediately before. Such a desired state indicates that the forward real-time evolution operator $U_{RTE}$ has successfully acted on the input state $|\psi\rangle$ and is also referred to as a success state. Since the unitary gate operation 522 of the first reflection operation 51 of the present embodiment is the Hermitian conjugate $V_{RTE}^\dagger$ of such a $V_{RTE}$, it is configured such that the backward real-time evolution operator $U_{RTE}^\dagger$ acts when the corresponding ancillary bit 322 is in the desired $|0\rangle$ state, and the forward real-time evolution operator $U_{RTE}$ acts on the computational qubits 321 when the corresponding ancillary bit 322 is in the undesired $|1\rangle$ state. In other words, each of the unitary gate operations 522 may be configured to allow either a forward real-time evolution operator $U_{RTE}$ or a backward real-time evolution operator $U_{RTE}^\dagger$ as a unitary operation or its Hermitian conjugate operation to act on the computational qubits 321 depending on the state of the ancillary bits 322. The forward real-time evolution operator $U_{RTE}$ (or the backward real-time evolution operator $U_{RTE}^\dagger$) as the unitary operation is configured to correspond to performing the operation once. Here, the desired state in the unitary gate operation 522 may coincide with the first reflection state of the first reflection operation 51.

As shown in FIG. 7, after a total of K unitary gate operations 522 are performed, an output transformation operation 523 is executed. The output transformation operation 523 is configured to allow a Hermitian operation of a W gate ($W^\dagger$ operation) and a Hadamard gate operation (H) to sequentially act on each of the ancillary bits 322.

The first operational quantum circuit 52 may include a reference circuit 524 (specifically, a Hermitian operation reference circuit $U_{ref}^\dagger$ of the reference circuit 524 ($U_{ref}$)). The reference circuit 524 is configured to act on the computational qubits 321 and to output an input state $|\psi\rangle$ based on the state of the initialized computational qubits 321. The states of the n computational qubits 321 after the K unitary gate operations 522 have been performed depending on the states of the ancillary bits 322 are input to the reference circuit 524. Specifically, the states of the n computational qubits 321 output from a portion of the first operational quantum circuit 52 other than the reference circuit 524 are input to the reference circuit 524. Hereinafter, for convenience of explanation, the state of the initialized n computational qubits 321 is simply referred to as an initial state. The reference circuit 524 is a quantum circuit configured to generate the input state |ψ> from the overall state of the n computational qubits 321 among the (n+K) qubits 320 input to the first operational quantum circuit 52. Specifically, the reference circuit 524 generates an n-qubit system composed of a desired input state |ψ> by inputting the initial state |0>*n. As a result, a state of the (n+K)-qubit system composed of the input state |ψ> and K ancillary bits 322 that are set to the |0> state is generated.

The reference circuit 524 can be appropriately configured depending on the generated input state |ψ>. For example, the reference circuit 524 is configured to perform, for each of the computational qubits 321, quantum gate operations corresponding to an amplitude difference and a phase difference of the component of the first state |0> between the initial state and the input state |ψ>, as well as an amplitude difference and a phase difference of the component of the second state |1> between the initial state and the input state |ψ>. The reference circuit 524 functions as a quantum circuit for inputting, to the computational quantum circuit 5 (specifically, the first operational quantum circuit 52), a state of an (n+K)-qubit system represented by |ψ>*|0>*K. According to such a configuration, by setting an appropriate input state |ψ> in advance for the Hamiltonian H, it is possible to obtain a highly accurate computational result with a smaller number of operations. The reference circuit 524 is configured to be executed before the first operational quantum circuit 52.

The state output from the first operational quantum circuit 52 is input to the second reflection operation 53. The second reflection operation 53 is configured to act on the computational qubits 321 and the ancillary bits 322 so as to change the phase of a second reflection state, which is one of the components of the first state |0> or the second state |1> included in each of the computational qubits 321 and the ancillary bits 322. The state of the ancillary bits 322 included in the first reflection state and the state of the ancillary bits 322 included in the second reflection state are common. In other words, The quantum circuit is configured so that the K-qubit state |0>*K composed of the K ancillary bits 322 as the first reflection state, and the K-qubit subsystem state |0>*K, which is a subsystem composed of the K ancillary bits 322 in the (n+K)-qubit system composed of the n computational qubits 321 and the K ancillary bits 322 as the second reflection state, are common. Therefore, the term "common" state does not mean that the overall states of the systems input to the first reflection operation 51 and the second reflection operation 53 are identical.

The second reflection operation 53 corresponds to the zero reflection $S_0^{n+K}(\varphi_{2i+1})$ in Equation (9). The first reflection state and the second reflection state do not necessarily have to be identical, as long as a correspondence relationship based on a predetermined unitary operation exists. For example, the first reflection state may be the |0> state, and the second reflection state may be the |1> state. The phase of the first reflection operation 51 may be inverted with respect to the phase of the second reflection operation 53. According to such a configuration, quantum acceleration can be further enhanced by performing phase matching. In the present embodiment, the rotation angle (global phase) of the second reflection operation 53 is $\varphi_{2i+1} = 0$, so that the phase of the first reflection operation 51 and the rotation angle (phase) of the second reflection operation 53 are inverted. It should be noted that the reference circuit 544 described above may be incorporated not in the first operational quantum circuit 52 but in the second reflection operation 53. In this case, the second reflection operation 53 may be configured to perform a zero reflection that sets the input state |ψ> to the |0> state for the computational quantum circuit 5 by appropriately performing a unitary transformation on the state output from the first operational quantum circuit 52 through the reference circuit 544.

The state output from the second reflection operation 53 is input to the second operational quantum circuit 54. The second operational quantum circuit 54 is configured to be converted into a Hermitian conjugate circuit of the first operational quantum circuit 52 by using a predetermined unitary gate operation. For example, the second operational quantum circuit 54 is configured to be Hermitian conjugate of the first operational quantum circuit 52 and corresponds to $U_{REF}^{(K)}$ in Equation (9). Similar to the first operational quantum circuit 52, the second operational quantum circuit 54 includes an input transformation operation 541, K unitary gate operations 542, an output transformation operation 543, and a reference circuit 544. The input transformation operation 541 is the Hermitian conjugate of the output transformation operation 523. The unitary gate operation 542 is the Hermitian conjugate of the unitary gate operation 522. The output transformation operation 543 is the Hermitian conjugate of the input transformation operation 521. The reference circuit 544 ($U_{ref}$) is the Hermitian conjugate of the reference circuit 524. Among the states output from the second reflection operation 53, the part corresponding to the ancillary bits 322 is input to the input transformation operation 541, and the part corresponding to the computational qubits 321 is input to the reference circuit 544. Thereafter, the states output from the input transformation operation 541 and the reference circuit 544 are input to the K unitary gate operations 542. After the K unitary gate operations 542 are performed, the output state is output from the second operational quantum circuit 54 through the output transformation operation 543. Here, the unitary gate operations 542 are described, and explanations of the input transformation operation 541, the unitary gate operations 542, and the reference circuit 544 are omitted since they are the same as those in the first operational quantum circuit 52.

The unitary gate operation 542 of the second operational quantum circuit 54 is configured to be Hermitian conjugate of the unitary gate operation 522 of the first operational quantum circuit 52. In the present embodiment, the unitary gate operation 542 is configured such that either a forward real-time evolution operator $U_{RTE}$ or a backward real-time evolution operator $U_{RTE}^\dagger$ acts depending on the state of the ancillary bit 322. The desired state of $V_{RTE}$ is configured to coincide with the reflection state of the reflection operation that acts immediately before. Here, the desired state of the unitary gate operation 542 is configured to coincide with the second reflection state (|0> state) of the second reflection operation 53. According to such a configuration, the computational quantum circuit 5 can be further simplified, and the number of operations included in the computational quantum circuit 5 can be reduced.

The computational quantum circuit 5 may further include an observation operation 55.

The observation operation 55 is configured to observe the state of each of the ancillary bits 322 that functions as a control bit of the unitary gate operation 522. According to such a configuration, a final state in which the time evolution by each time evolution gate operation has been properly performed can be output as a calculation result. Among the states output from the second operational quantum circuit 54, the observation operation 55 is performed on the portion corresponding to the ancillary bits 322. As a result, the state of the ancillary bits 322 is projected onto the state observed by the observation operation 55, and accordingly, the state of the computational qubits 321 collapses into the state in which the K operations have been successfully performed a predetermined allowable number of times or more. Here, the number of ancillary bits 322 for which the second reflection state (|0> state) is observed indicates the number of times the operation has acted on the input state |ψ>. For example, when the |0> state is observed for all K ancillary bits 322 means that all K operations have been performed on the input state |ψ>.

As described above, the state output from the computational quantum circuit 5 takes a state in which an operation has acted on the input state |ψ> depending on the observation results of the ancillary bits 322. Hereinafter, for convenience of explanation, the state of the n computational qubits 321 output from the computational quantum circuit 5 is referred to as a final state.

In summary, the computational quantum circuit 5 is configured to repeatedly perform, K times (where K is an integer of 2 or more), an operation based on a Hamiltonian on an input state |ψ> represented by n computational qubits 321, and to act on the n computational qubits 321 and a plurality of ancillary bits 322 depending on K. Here, each state of the computational qubits 321 and the ancillary bits 322 is configured to be represented by using at least a first state and second state which are observable. The computational quantum circuit 5 is configured to allow the first reflection operation 51, the first operational quantum circuit 52, the second reflection operation 53, and the second operational quantum circuit 54 to sequentially act. The first reflection operation 51 is configured to act on the plurality of ancillary bits 322 so as to change the phase of the first reflection state, which is one of the components of the first state or the second state included in each of the plurality of ancillary bits 322. The first operational quantum circuit 52 is configured to act on the n computational qubits 321 corresponding to the input state |ψ> and includes unitary gate operations 522 corresponding respectively to the ancillary bits 322. Each unitary gate operation 522 is configured to use one of a plurality of different ancillary bits 322 as a control bit and the computational qubits 321 as target bits, and to change the mode of action on the computational qubits 321 depending on the state of the ancillary bit 322. The second reflection operation is configured to act on the computational qubits and the ancillary bits so as to change the phase of the second reflection state, which is one of the components of the first state or the second state included in each of the computational qubits and the ancillary bits. The second operational quantum circuit 54 is configured to be converted into a Hermitian conjugate circuit of the first operational quantum circuit by using a predetermined unitary gate operation.

According to such a configuration, quantum amplitude amplification can be performed while at least one different ancillary bit 322 is assigned to each step of the time evolution. Therefore, compared with the case where quantum amplitude amplification is performed using a single ancillary bit 322, it is possible to suppress the increase in the depth of the quantum circuit that accompanies the increase in the number of repetitions. Accordingly, quantum acceleration can be promoted.

3.4 Modifications of computational quantum circuit 5

It should be noted that the computational quantum circuit 5 described above is merely an example, and its specific aspect is not limited to that illustrated in FIG. 6 or the like.

The phases $\varphi_{2i}$ and $\varphi_{2i+1}$ of the first reflection operation 51 and the second reflection operation 53 are arbitrary.

The first reflection state and the second reflection state may be arbitrary as long as they can be associated with each other through a unitary transformation or the like. In other words, the first operational quantum circuit 52 and the second operational quantum circuit 54 are not limited to being Hermitian conjugates of each other, and may include various arbitrary elements such as arbitrariness in global phase or arbitrariness in the choice of basis. That is, the first operational quantum circuit 52 and the second operational quantum circuit 54 only need to be constructible as Hermitian conjugates depending on various arbitrary elements.

In the above embodiment, probabilistic operators $V_{RTE}^\dagger$ and $V_{RTE}$ based on the probabilistic imaginary-time evolution method were used as the unitary gate operations 522 and 542. However, the present disclosure is not limited thereto, and any probabilistic operator or even a general operator may be used.

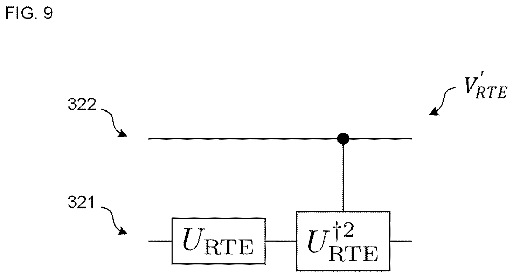

The method of constructing a probabilistic operator is not limited to the $V_{RTE}$ of the present embodiment; it is sufficient that different operation modes (in particular, a forward-type operator such as $U_{RTE}$ and a backward-type operator such as $U_{RTE}^\dagger$) are configured to act on the computational qubit 321 depending on whether the ancillary bit 322 is in the |0> state or the | 1> state. FIG. 9 is a diagram illustrating a modified example of $V_{RTE}$. Hereinafter, the $V_{RTE}$ shown in FIG. 9 may be referred to as $V_{RTE}$' to distinguish it from the $V_{RTE}$ shown in FIG. 8. $V_{RTE}$' allows the forward real-time evolution operator $U_{RTE}$ to act on the computational qubit 321 regardless of the state of the ancillary bit 322. Subsequently, $V_{RTE}$' performs no operation (in other words, performs an identity operation) when the ancillary bit 322 is in the |0> state, and allows the backward real-time evolution operator $U_{RTE}^{\dagger}$ to act twice when the ancillary bit 322 is in the | 1> state. Accordingly, an operation similar to that of the $V_{RTE}$ shown in FIG. 8 can be performed.

4. information processing method

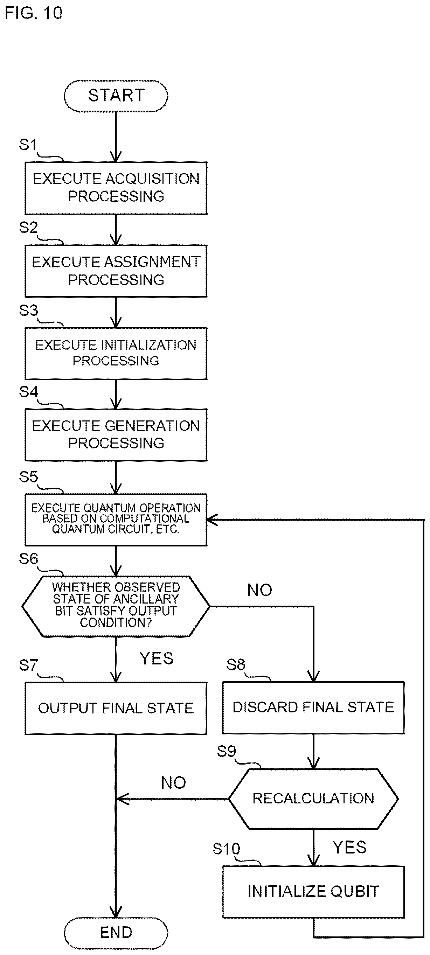

This chapter describes the flow of information processing performed in the information processing system 1, based on the theory described above. The results of processing in each step included in the information processing described below may be output in a manner recognizable to a user by using the display unit 44 or the like as appropriate. Note that the information processing may include any exception processing that is not shown in the drawing. Exception processing includes interruption of the information processing and omission of each processing. Selection or input performed in the information processing may be based on user operation or may be performed automatically without user operation. FIG. 10 is a flowchart illustrating an overview of the information processing executed in the information processing system 1.

[Step S1]

First, in Step S1, the acquisition unit 231 executes acquisition processing to acquire information related to an input state, information related to a Hamiltonian H, and the number of repetitions K of an operation based on the Hamiltonian H. In the present embodiment, K is an integer of 2 or more. The information related to the input state $|\psi>$ includes, for example, information related to components of a system described by the Hamiltonian H. The components of the system include, for instance, particle types contained in the system, the number of particles for each particle type, and the resolution of the position of each particle.

[Step S2]

Next, in Step S2, the assignment unit 232 assigns computational qubits 321 and ancillary bits 322 to be used for quantum computation based on the acquisition results in Step S1. For example, the assignment unit 232 calculates the number n of computational qubits 321 necessary to represent the input state $|\psi>$ based on the information related to the input state $|\psi>$, and assigns n computational qubits 321 from among the qubits 320 based on the number n. Accordingly, the input state $|\psi>$ of the present embodiment is represented by the n computational qubits 321. For example, the assignment unit 232 also assigns at least K ancillary bits 322 from among the qubits 320 to be used for operations of a computational quantum circuit 5 described later, based on the number of repetitions K. In the present embodiment, the assignment unit 232 assigns K ancillary bits 322.

[Step S3]

Next, the processing proceeds to Step S3, in which the processor 23 executes an initialization processing and performs preprocessing for generating an input state $|\psi>$ to be input to a computational quantum circuit 5 described later.
First, the quantum manipulation unit 234 transmits an instruction to the quantum processor 33 to initialize the states of the assigned n computational qubits 321 and K ancillary bits 322 to predetermined initial states. Based on this instruction, the quantum processor 33 performs initialization of the n computational qubits 321 and the K ancillary bits 322. The initial state may be defined, for example, as a state in which the states of both the n computational qubits 321 and the K ancillary bits 322 are in the first state |0>, but is not limited thereto and may be arbitrary.

[Step S4]

Next, in Step S4, the generation unit 233 performs a generation processing to generate the computational quantum circuit 5 based on the acquisition results obtained by the acquisition unit 231. The computational quantum circuit 5 of the present embodiment is generated as an instruction for causing the quantum computer 3 to perform quantum operations. Here, an example of processing for generating the computational quantum circuit 5 will be described.
First, the generation unit 233 generates a reference circuit $U_{ref}$ based on the initialized state ($|0>^{*(n+K)}$ in the present embodiment) and the input state $|\psi>$. For example, the generation unit 233 may generate the reference circuit $U_{ref}$ by comparing the respective components of the initialized state and the input state $|\psi>$ and combining unitary gate operations to be performed on each of the computational qubits 321 based on the phase difference and amplitude difference between these states.

The generation unit 233 also generates a $V_{RTE}$ (specifically, a $U_{RTE}$ and its Hermitian conjugate $U_{RTE}^{\dagger}$) that defines the unitary gate operations 522 and 542 acting on the (n+K)-qubit system based on the acquired Hamiltonian H. The generation unit 233 sets a success state for each of the two types of unitary gate operations 522 and 542 corresponding to the generated $V_{RTE}$. Accordingly, the unitary gate operations 522 and 542 are defined. The generation unit 233 sets each of the K ancillary bits 322 as control bits for the unitary gate operations 522 and 542 defined as described above. The input transformation operations 521 and 541, and the output transformation operations 523 and 543, may be either predetermined operations or operations whose parameters are appropriately adjusted based on the acquisition results. The generation unit 233 generates the first operational quantum circuit 52 using the input transformation operation 521, the unitary gate operation 522, the output transformation operation 523, and the reference circuit 524 defined in this manner. Similarly, the generation unit 233 generates the second operational quantum circuit 54.

Next, the generation unit 233 generates the first reflection operation 51 such that the success state of the unitary gate operation 522 corresponds to the first reflection state. The generation unit 233 also generates the second reflection operation 53 such that the success state of the unitary gate operation 542 corresponds to the second reflection state. Furthermore, the generation unit 233 generates an observation operation 55 to observe the states output from the second operational quantum circuit 54 for each of the K ancillary bits 322.

The generation unit 233 generates the computational quantum circuit 5, as shown in FIG. 7, based on the first reflection operation 51, the first operational quantum circuit 52, the second reflection operation 53, the second operational quantum circuit 54, and the observation operation 55 generated in this manner. In other words, the information processing method includes a generation method of the computational quantum circuit 5. The generation method is a method for generating the computational quantum circuit 5. In the acquisition step, information related to the input state $|\psi\rangle$, information related to the Hamiltonian, and the number of repetitions K of the operation based on the Hamiltonian are acquired. The number of repetitions K corresponds to K, which is the number of times the unitary gate operation 522 is performed. In the assignment step, a plurality of ancillary bits 322 corresponding to the number of repetitions are assigned. In the generation step, the computational quantum circuit 5 configured to allow operations to repeatedly act on the computational qubits 321 is generated, based on the acquisition results obtained in the acquisition step. The generation method of the computational quantum circuit 5 is a method for generating a so-called program that serves as an instruction code for causing the quantum processor 33 to execute specified quantum operations.

[Step S5]

Next, the processing proceeds to Step S5, in which the quantum manipulation unit 234 causes the quantum processor 33 to execute a series of quantum operations based on the computational quantum circuit 5 and the like. As a result, a series of quantum operations defined by the computational quantum circuit 5 and the like are executed on the assigned computational qubits 321 and ancillary bits 322, the portion corresponding to the computational qubits 321 in the initialized state transitions to the input state $|\psi\rangle$, the operations are repeated K times, and quantum amplitude amplification is performed. Subsequently, the final state output from the computational quantum circuit 5 is observed by the observation operation 55. At this time, the quantum manipulation unit 234 measures the number of times the successful states ($|0\rangle$ states) is observed in the portion corresponding to the ancillary bits 322 of the final state output from the computational quantum circuit 5.

[Step S6]

Subsequently, the processing proceeds to Step S7, in which the processor 23 determines whether the observed states of the ancillary bits 322 satisfy a predetermined output condition. The output condition is a condition for determining whether to output the final state as a calculation result, and is defined, for example, based on the degree of success of the repeated operations performed on the computational qubits 321. For example, the output condition is configured to be satisfied when the number of times the successful states is observed is greater than or equal to a predetermined value. The predetermined value is appropriately set depending on, for instance, the required calculation accuracy or computation time, and can be a maximum of K (when successful states are observed in all the ancillary bits 322). The successful state only needs to correspond to the desired state ($|0\rangle$ state) in the second operational quantum circuit 54, that is, the second reflection state. The fact that one state corresponds to another state means, for example, that the states are mutually convertible via a unitary operation or the like.

[Step S7]

When the determination result in Step S6 is affirmative, that is, when it is determined that the output condition is satisfied, the processing proceeds to Step S7, in which the state (final state) of the n computational qubits 321 after the observation by the observation operation 55 is output as a calculation result. In other words, the output unit 235 outputs the state of the computational qubits 321 as a calculation result based on the observation results of the ancillary bits 322 (after the second operational quantum circuit 54 has been executed).

Thereafter, the information processing system 1 terminates the present information processing. The use of the output calculation result is arbitrary. For example, the calculation result may be used for identifying the final state through the observation operation, or may be used as an input state for another quantum circuit. In addition, information related to the calculation result (such as the observation result of the computational qubits 321) may be appropriately stored in the storage unit 22 or the like.

[Step S8]

On the other hand, when the determination result in Step S6 is negative, that is, when it is determined that the output condition is not satisfied, the processing proceeds to Step S8, in which the processor 23 discards the final state.

[Step S9]

Thereafter, the processor 23 determines whether to perform recalculation. Whether to perform recalculation can be appropriately determined, for example, based on the available calculation time or the upper limit of the number of calculations. When it is determined that recalculation is unnecessary, the information processing system 1 terminates the present information processing.

[Step S10]

On the other hand, when the determination result in Step S10 is affirmative, the quantum manipulation unit 234 initializes the computational qubits 321 and the ancillary bits 322. Thereafter, the processing returns to Step S6, and the quantum manipulation unit 234 causes the quantum processor 33 to again execute quantum operations based on the computational quantum circuit 5 and the like. In this manner, the information processing system 1 generates and stores calculation results based on the computational quantum circuit 5 and executes various quantum computations.

According to the above-described information processing, quantum amplitude amplification can be performed while at least one different ancillary bit 322 is assigned to each step of the time evolution. Thus, compared with the case where quantum amplitude amplification is performed using a single ancillary bit 322, it is possible to suppress the increase in the depth of the quantum circuit that accompanies the increase in the number of repetitions. Accordingly, quantum acceleration can be promoted.

5. Results of simulation based on computational quantum circuit 5

This section describes the results of simulation related to the computational quantum circuit 5 described above. The simulation was executed on a classical computer using Qiskit.

In this simulation, the following Hamiltonian of the Heisenberg spin model was used as the Hamiltonian H.

[Equation 17]

$$\mathcal{H} = \sum_{\langle j,k \rangle} \vec{\sigma}_j \cdot \vec{\sigma}_k + \sum_j h_j \sigma_j^z \qquad (13)$$

Here, $\sigma_j = (\sigma_{jx}, \sigma_{jy}, \sigma_j^z)$ is an operator representing a three-dimensional spin. j and k are indices indicating the site numbers where the spins are located. <j, k> represents a pair of nearest-neighbor sites on a closed one-dimensional chain. A spin system is thereby constructed. $h_j$ represents the strength of a uniform magnetic field at the j-th site. The magnetic field strength $h_j$ was randomly selected from a uniform distribution ranging from -1 to 1. The CRTE gate is implemented by performing a fourth-order Trotter decomposition for the even-odd groups of the above Hamiltonian H. A multi-step PITE (a method in which the PITE method is repeatedly executed) was adopted as a probabilistic algorithm for generating the ground state of the Hamiltonian H. In the PITE method, a constant energy shift is introduced to improve the total success probability, and scheduling of the size of the imaginary-time step $\Delta\tau$ is adopted. Refer to Non-Patent Document 1 for details of the scheduling and the like.

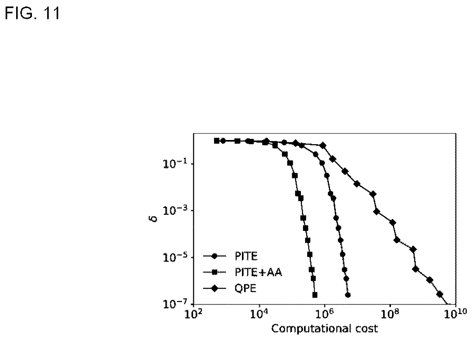

In this simulation, the inventors conducted simulations to generate the ground state of the above Hamiltonian H using three methods: a method in which a single-step PITE method is repeatedly applied, a method using quantum phase estimation (QPE), and the method according to the present information processing, and evaluated the performance of these methods. The method according to the present information processing is a computational method based on a quantum computing algorithm that combines a multi-step PITE method with quantum amplitude amplification, and is denoted as "PITE + QAA" in FIG. 11. Hereinafter, for convenience of explanation, in the description of the simulation results, the method in which a single-step PITE method is repeatedly applied is referred to as "PITE," the method using quantum phase estimation is referred to as "QPE," and the method according to the present information processing is referred to as "PITE + QAA."

FIG. 11 is a diagram showing simulation results of the relationship between the computational cost and the infidelity $\delta_K$ in each method for generating the ground state of the Hamiltonian H. As described above, the infidelity is given by $\delta_K = (1 - F_K)$. For convenience of explanation, the infidelity $\delta_K$ is simply denoted as $\delta$ in FIG. 11.

This simulation was conducted using a one-dimensional Heisenberg model having eight spins. Furthermore, a state in which each eigenstate $|\lambda_i\rangle$ of the Hamiltonian H has an equal probability weight was used as the initial state (input state $|\psi\rangle$). Specifically, the inventors set the initial state so that the coefficients $\{c_i\}$ of the N eigenstates $\{|\lambda_i\rangle\}$ included in the input state $|\psi\rangle$ satisfy $|c_i|^2 = 1/N$. For each method, as the number of steps (K) in PITE, the number of digits (the number K of ancillary bits 322 in the multi-step PITE), and the resolution of QPE increased, the infidelity $\delta$ decreased, and the computational cost increased. As the infidelity $\delta$ decreases, the success probability of the operation tends to decrease and approach 1/N. Accordingly, the increase in computational cost corresponds to the increase in the number of repetitions K of probabilistic operations in PITE and the increase in the resolution of QPE. As shown in FIG. 11, in all methods, it was confirmed that the infidelity $\delta$ decreased as the computational cost (i.e., the number of repetitions K or the like) increased. On the other hand, when the infidelity $\delta$ reached approximately $10^{-7}$, the computational cost was $10^{10}$ for QPE, $10^6$ to $10^7$ for PITE, and less than $10^6$ for PITE + QAA. These results suggest that PITE can reduce the infidelity $\delta$ with a lower computational cost than QPE. Furthermore, these results suggest that PITE + QAA can reduce errors with a lower computational cost than PITE. Therefore, in terms of achieving both computational cost and infidelity reduction capability, the usefulness of PITE as a probabilistic operation and the usefulness of the present information processing incorporating QAA into PITE have been demonstrated.

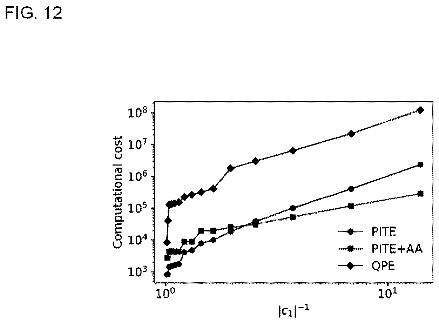

FIG. 12 is a diagram showing simulation results of the relationship between the weight $|c_1|^{-1}$ of the probability of the ground state of the input state $|\psi\rangle$, obtained using each method, and the computational cost. The computational cost shown here is an estimate for the case where the infidelity $\delta_K$ is less than $10^{-4}$. For the probability weighting of the input state $|\psi\rangle$, a Gaussian distribution of eigenstate functions was used such that its mean value corresponds to the ground state energy. In all methods, the computational cost tended to increase as $|c_1|^{-1}$ increased. This indicates that the smaller the component of the ground state included in the input state $|\psi\rangle$, the more difficult it is to generate the ground state. As shown in FIG. 12, the computational costs of PITE and PITE + QAA were lower than that of QPE for any value of $|c_1|^{-1}$. This suggests that the probabilistic algorithm called PITE is advantageous compared to QPE. In addition, when $|c_1|^{-1} < 1/2$, the computational cost of PITE was lower than that of PITE + QAA, whereas when $|c_1|^{-1} > 1/2$, the computational cost of PITE + QAA was lower than that of PITE. This indicates that the present information processing (PITE + QAA) is more useful than PITE, especially when the desired state (in this case, the ground state) is difficult to observe in the input state $|\psi\rangle$.

From the above simulation results, the usefulness of the present information processing was demonstrated through simulation.

6. Supplement - Overview of probabilistic imaginary-time evolution

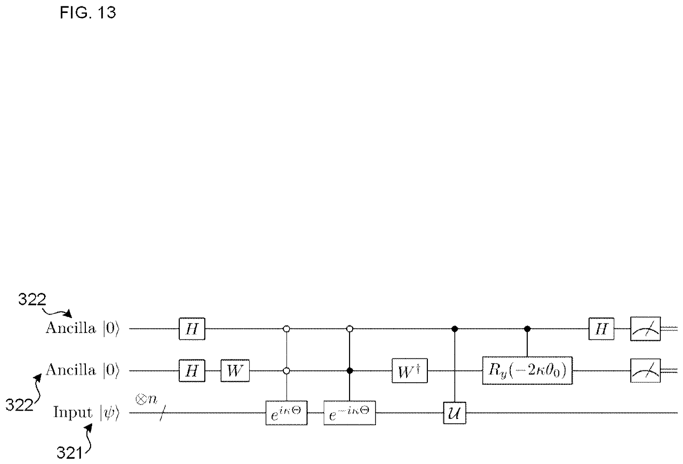

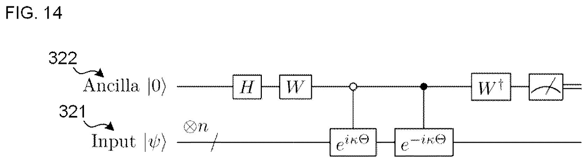

This section describes an overview of the probabilistic imaginary-time evolution (PITE) used in the above-described information processing. It should be noted that although the symbols of the operators differs from those in the above-described information processing, appropriate correspondences may be established as needed. FIG. 13 is a quantum circuit for implementing a time-evolution operator $\exp(L\Delta t)$ with a general operator L as a generator. FIG. 14 is a quantum circuit for implementing an imaginary-time evolution operator $\exp(-H\Delta\tau)$ with a general Hermitian operator H as a generator.

6.1 Quantum circuit for a time-evolution operator with general operator as generator

When a general operator L for an n-qubit system composed of n computational qubits 321 is given, consideration is made to construct a quantum circuit that implements a time-evolution operator $\exp(L\Delta t)$ with the operator L as a generator. Hereinafter, for convenience of explanation, an n-qubit system composed of n computational qubits 321 may simply be referred to as an "n-qubit system," and the overall state of the n-qubit system composed of the n computational qubits 321 may be referred to as an "n-qubit state." $\Delta t$ is a small real number representing a time step. If the time-evolution operator $\exp(L\Delta t)$ can be configured as a quantum circuit, then by repeating it, a time-evolution operator $\exp(LN\Delta t)$ can be executed for any natural number N.

A non-unitary Hermitian operator M is defined from a real constant $m_0$ as in Equation 18. Moreover, a non-Hermitian unitary operator U is defined as in Equation 19.

[Equation 18]

$$\mathcal{M} \equiv m_0 e^{(L+L^\dagger)\Delta t}$$

[Equation 19]

$$\mathcal{U} \equiv e^{(L-L^\dagger)\Delta t}$$

Furthermore, a Hermitian operator $\Theta$ for the n-qubit system is defined as in Equation 20.

[Equation 20]

$$\Theta \equiv \arccos \frac{\mathcal{M} + \sqrt{1 - \mathcal{M}^2}}{\sqrt{2}}$$

When $\kappa$ and $d_0$ are respectively defined as shown in Equations 21 and 22, $\theta_0$ is defined using these values as shown in Equation 23.

[Equation 21]

$$\kappa \equiv \mathrm{sgn}\left(m_0 - \frac{1}{\sqrt{2}}\right)$$

[Equation 22]

$$d_0 \equiv \frac{m_0 + \sqrt{1 - m_0^2}}{\sqrt{2}}$$

[Equation 23]

$$\theta_0 \equiv \kappa \arccos d_0$$

The quantum circuit shown in FIG. 13 is defined as a quantum circuit for n + 2 qubits. The gate W included therein is a single-qubit transformation defined by Equation 24. Ry shown in FIG. 13 represents a y-rotation gate.

[Equation 24]

$$W \equiv \frac{1}{\sqrt{2}} \begin{pmatrix} 1 & -i \\ 1 & i \end{pmatrix}$$

When an n + 2-qubit state composed of arbitrary n computational qubits 321 in the input state |ψ> and two ancillary bits 322 in the |0> state is input to the quantum circuit shown in FIG. 13, an overall state changes as expressed in Equation 25 within the first-order range of $\Delta t$ just before measurement. As can be seen from the right-hand side of the equation, if the two ancillary bits 322 are measured and the |0>*|0> state representing the state of the two ancillary bits 322 is obtained, the n-qubit state composed of the computational qubits 321 immediately thereafter becomes the desired state exp(L$\Delta t$) |ψ>, apart from a physically insignificant constant factor.

[Equation 25]

$$|\psi\rangle \otimes |0\rangle \otimes |0\rangle \longmapsto \frac{1}{2}(\mathcal{M} + m_0\mathcal{U})|\psi\rangle \otimes |0\rangle \otimes |0\rangle + (\cdots)$$

This means that, by using the quantum circuit QC1, the operator exp(LΔt) for the n qubits can be probabilistically implemented. Since the operators exp(iκΘ) and exp(-iκΘ) for the n qubits are unitary operators, they can be implemented as unitary gates for the n + 2 qubits by combining the ancillary bits 322.

In other words, this information processing method includes the following steps. In a transformation step, an operator for n qubits is converted into a unitary gate by using less than (n/2) ancillary bits. The unitary gate is a form in which the operator is directly implementable. In a circuit generation step, a quantum circuit is generated that, based on the unitary gate, functions as a desired time-evolution operator when the ancillary bits are observed in a predetermined state. According to such an aspect, the exponential number of measurements of qubits can be further reduced.

6.2 Quantum circuit for an imaginary-time evolution operator with general Hermitian operator as generator

In the quantum circuit shown in FIG. 13, as a special case where L is a Hermitian operator, the desired operation can be implemented with a smaller number of ancillary bits. Here, to explicitly indicate that the operator L is Hermitian, a Hermitian operator H is used instead of L in the following description. Examples of Hermitian operators include, for instance, an electronic Hamiltonian and an Ising Hamiltonian, but these are merely examples and are not limited thereto.

Assume that a Hermitian operator H for an n-qubit system is given. Consider an imaginary-time evolution operator exp(-HΔτ) specified by this operator and a real number Δτ. A non-unitary Hermitian operator M is defined from this and a real constant $m_0$ as expressed in Equation 26.

[Equation 26]

$$\mathcal{M} \equiv m_0 e^{-\mathcal{H}\Delta\tau}$$

Further, a Hermitian operator Θ for the n-qubit system is defined as expressed in Equation 27.

[Equation 27]

$$\Theta \equiv \arccos \frac{\mathcal{M} + \sqrt{1 - \mathcal{M}^2}}{\sqrt{2}}$$

When an arbitrary n-qubit state |ψ> is given, consideration is made to construct a quantum circuit for obtaining M|ψ>. To implement the operator M, the quantum circuit shown in FIG. 14 is considered as a quantum circuit for n + 1 qubits.

When the n + 1-qubit state: composed of an arbitrary n-qubit state |ψ> consisting of n computational qubits 321; and an ancillary bit 322 in the |0> state, is input to the quantum circuit shown in FIG. 14, the overall state changes as expressed in Equation 28 just before measurement. As can be seen from the right-hand side of the equation, if the |0> state is obtained by measuring the ancillary bit 322 through an observation operation, then immediately thereafter the n-qubit state becomes the desired state M|ψ> (apart from a physically insignificant constant factor).

[Equation 28]

$$|\psi\rangle \otimes |0\rangle \longmapsto \mathcal{M}|\psi\rangle \otimes |0\rangle + \sqrt{1 - \mathcal{M}^2}|\psi\rangle \otimes |1\rangle$$

This means that the imaginary-time evolution operator M for the n qubits can be probabilistically implemented by using the quantum circuit shown in FIG. 14. Moreover, the operators exp(iκΘ) and exp(-iκΘ) for the n qubits are unitary operators (more specifically, real-time evolution operators), and thus they can be implemented as unitary gates for the n + 1 qubits by combining them with the ancillary bit 322.

In other words, preferably, in the transformation step, the transformation unit converts the operator into a form that uses only a time-evolution operator and other unitary operators. The time-evolution operator includes a Hermitian operator. More specifically, in the transformation step, the transformation unit converts the operator into a form that uses only a real-time evolution operator and other unitary operators. The real-time evolution operator includes a unitary operator. Furthermore, the time-evolution operator is configured to be generatable by a Hermitian operator H. It should be noted that the form of the time-evolution operator is not limited thereto and may be arbitrary. For example, the form of the time-evolution operator may be one in which the operator appears in the expression, or one in which the operator belongs as an element of a set.

6.3 Equivalent transformation of the quantum circuit with Hermitian operator as generator

Since exp(iκΘ) and exp(-iκΘ) included in the quantum circuit shown in FIG. 14 are unitary operators, they can, in principle, be implemented as unitary gates. However, a specific method for implementing the definition of Θ given in Equation 27 directly as a unitary gate is not obvious. Therefore, if the quantum circuit shown in FIG. 13 can be approximated (transformed into a circuit that is strictly equivalent within a finite order of a mathematical expansion) to another circuit that performs the same calculation, that circuit is beneficial for practical quantum computation. The equivalent transformation is described below.

$s_1$ is defined as expressed in Equation 29. Using this, a unitary operator $U_{RTE}$ is defined as expressed in Equation 30.

$$[\text{Equation 29}]$$
$$s_1 \equiv \frac{m_0}{\sqrt{1 - m_0^2}}$$

$$[\text{Equation 30}]$$
$$U_{\text{RTE}} \equiv e^{-is_1 \mathcal{H} \Delta \tau}$$

When an n + 1 qubit state composed of n computational qubits 321 having an arbitrary n-qubit state |ψ> and one ancillary bit 322 in the |0> state is input to the quantum circuit shown in FIG. 14, the overall state changes just before measurement as expressed in Equation 31 within the first-order range of $\Delta\tau$. The state after this change coincides, within the first-order range of $\Delta\tau$, with the state expressed in Equation 28. This means that the quantum circuit QC1 shown in FIG. 6 is equivalent, within the first-order range of $\Delta\tau$, to the quantum circuit shown in FIG. 14.

$$[\text{Equation 31}]$$

$$|\psi\rangle \otimes |0\rangle \otimes |0\rangle \longmapsto m_0(1 - \mathcal{H}\Delta\tau)|\psi\rangle \otimes |0\rangle + \left( \sqrt{1 - m_0^2} + \frac{m_0^2}{\sqrt{1 - m_0^2}} \mathcal{H}\Delta\tau \right) |\psi\rangle \otimes |1\rangle$$

exp(is_1HΔτ) and exp(-is_1HΔτ) are unitary real-time evolution operators, and various methods for efficiently implementing these operators as quantum gates have already been proposed. Accordingly, such existing methods can be directly applied to the present method.

By implementing the imaginary-time evolution operator as a quantum circuit and repeating it, the time-evolution operator exp(LNΔt) can be executed for any desired natural number N. Here, in order to correctly perform each imaginary-time step operation, the ancillary bit 322 must output the |0> state. By amplifying the amplitude (probability) of the ancillary bit 322 being in the |0> state at each imaginary-time evolution step, the time-evolution operator exp(LΔt) can be executed with a higher probability.

The amplification of the amplitude of the ancillary bit 322 being in the |0> state can be realized, as one method, by interposing a quantum amplitude amplification circuit. That is, preferably, the quantum circuit may further include a quantum amplitude amplification circuit capable of increasing the probability that the ancillary bit is observed in a predetermined state. For a general operator L, the operator exp(LNΔt) can be implemented on a quantum computer, thereby realizing a quantum circuit in which the operator exp(LΔt) acts on any initial state.

However, in the case of a general operator L, there is no necessity that the lowest eigenvalue is always a real number, and it is only guaranteed that the eigenvalues are real numbers when the operator L is a Hermitian operator. When the operator L is a regular non-Hermitian operator, allowing the imaginary-time evolution operator exp(LNΔt) to act on any initial state with a sufficiently large number N causes convergence to the eigenstate corresponding to the eigenvalue of L whose real part is the lowest. It should be noted, however, that even if L is not regular, it is still possible to realize a quantum circuit representing the operator exp(LNΔt).

Based on such a theory, the forward real-time evolution operator $U_{RTE}$ is defined, and the PITE method is implemented.

7. Others

The above-described information processing system 1 may be further modified or improved in the following aspects.

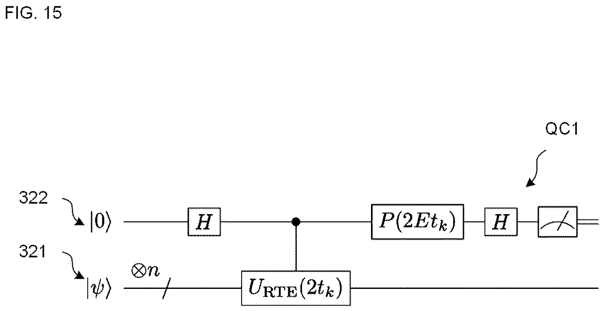

The above-mentioned probabilistic operation may be a cosine function operator $\cos(t_kH)$. FIG. 15 shows an example of a quantum circuit QC2 corresponding to a cosine function operator $\cos(t_kH)$. The quantum circuit QC2 is configured first to perform a Hadamard gate operation on the ancillary bit 322. Next, the quantum circuit QC2 is configured to perform a CRTE gate operation in which the ancillary bit 322 serves as a control bit and the computational qubit 321 serves as a target bit. In this CRTE gate operation, when the ancillary bit 322 is in the |0> state, no operation is performed on the computational qubit 321 (in other words, an identity operation is performed), and when the ancillary bit 322 is in the | 1> state, the forward real-time evolution operator $U_{RTE}$ acts on the computational qubit 321. The parameter corresponding to the size of the real-time step of the CRTE gate is arbitrary, but, for example, it may be $2t_k$. Subsequently, the quantum circuit QC2 is configured to apply a phase gate operation to the ancillary bit 322. The phase gate operation is an operation that rotates the phase of the ancillary bit 322. The phase rotation angle is arbitrary, but, for example, when using an energy shift of amount E, the phase rotation angle is $2Et_k$.

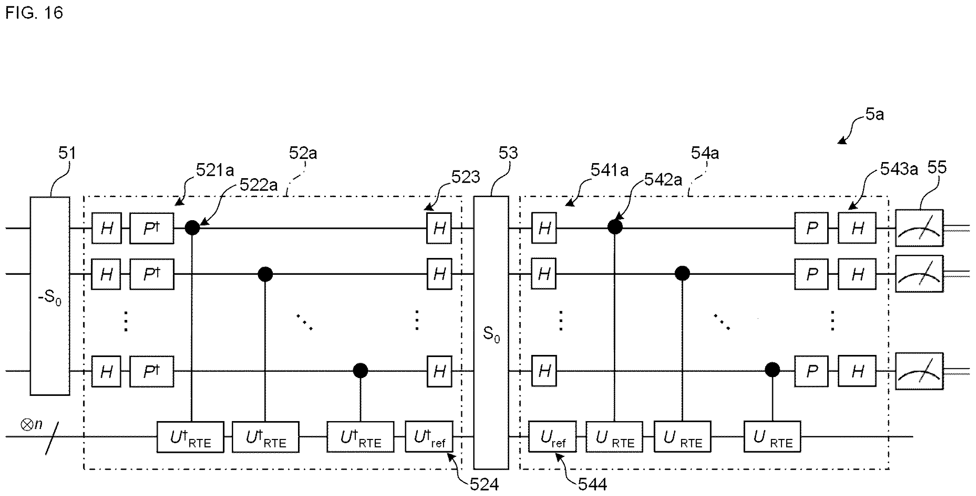

FIG. 16 is a diagram illustrating an example of a computational quantum circuit in a case where the cosine function operator $\cos(t_kH)$ is adopted as a probabilistic operation. Hereinafter, for convenience of explanation, the computational quantum circuit 5 shown in FIG. 16 is referred to as a computational quantum circuit 5a to distinguish it from the computational quantum circuit 5 shown in FIG. 7. The computational quantum circuit 5a differs from the computational quantum circuit 5 in the specific aspect of the first operational quantum circuit 52 and the second operational quantum circuit 54, and is common with respect to the first reflection operation 51, the second reflection operation 53, and the observation operation 55. Hereinafter, for convenience of explanation, components common to the computational quantum circuit 5 and the computational quantum circuit 5a are assigned the identical reference numerals, and descriptions thereof are omitted. Components that differ between the computational quantum circuit 5 and the computational quantum circuit 5a are denoted by the reference numerals of the computational quantum circuit 5 with the suffix "a." An input transformation operation 521a of a first operational quantum circuit 52a is composed of a Hadamard gate operation H and a Hermitian conjugate operation $P^\dagger$ of a phase gate operation P. A unitary gate operation 522a is composed of a single CRTE gate operation and is configured such that, when the corresponding ancillary bit 322 is in the | 0> state, no operation is performed on the computational qubits 321, and when the corresponding ancillary bit 322 is in the | 1> state, the Hermitian conjugate operator $U_{RTE}^\dagger$ of the forward real-time evolution operator is allowed to act on the computational qubits 321. An output transformation operation 523a is composed of a Hadamard gate operation H. A second operational quantum circuit 54a is configured to be the Hermitian conjugate of the first operational quantum circuit 52a. Specifically, an input transformation operation 541a, a unitary gate operation 542a, and an output transformation operation 543a are configured to be the Hermitian conjugates of the output transformation operation 543a, the unitary gate operation 522a, and the input transformation operation 541a, respectively. Accordingly, the operations repeatedly performed by the computational quantum circuit 5 are not limited to probabilistic imaginary-time operations.

In the above information processing, the assignment unit 232 assigned K ancillary bits 322 when the operation was repeated K times; however, more than K ancillary bits 322 may be assigned. For example, the assignment unit 232 may assign two or more ancillary bits 322 for each operation. This makes it possible to realize a wider variety of operations by using the ancillary bits 322 that can represent more diverse states as control bits or the like. Moreover, the assignment unit 232 may divide the number of repetitions K into two or more integers, for example, $K_1$ and $K_2$, generate a computational quantum circuit 5 for each of the repetition numbers $K_1$ and $K_2$, and generate a computational quantum circuit that, as a whole, repeats the operation K times by combining these computational quantum circuits 5 in series. In this case, the assignment unit 232 may assign less than K ancillary bits 322, for example, a number corresponding to the larger of $K_1$ and $K_2$. For example, in this case, the quantum manipulation unit 234 may execute quantum operations based on the computational quantum circuit corresponding to the number of repetitions $K_1$, then initialize the ancillary bits 322, and subsequently execute quantum operations based on the computational quantum circuit corresponding to the number of repetitions $K_2$ using the final state as the input state, thereby repeatedly performing a total of K operations on the initial input state to obtain a final state. Accordingly, when the number of repetitions K is divided into multiple numbers, the quantum circuits based on those divided numbers are also included in the computational quantum circuit 5 according to the present information processing.

The computational quantum circuit 5 does not necessarily need to include a function related to so-called quantum amplitude amplification. The function related to the quantum amplitude amplification can be realized, for example, by the first reflection operation 51, the first operational quantum circuit 52, and the second reflection operation 53. In this case, the generation unit 233 may generate a computational quantum circuit 5 that includes the second operational quantum circuit 54 as the operational quantum circuit depending on the number of repetitions K of the operation based on the Hamiltonian H. In other words, the above-described information processing method may include the following steps. In an acquisition step, information related to an input state |ψ> represented by n computational qubits 321, information related to a Hamiltonian, and the number of repetitions K (where K is an integer of 2 or more) of an operation based on the Hamiltonian are acquired. In an assignment step, a plurality of ancillary bits 322 are assigned depending on the number of repetitions K. In a generation step, the computational quantum circuit 5 is generated based on the acquisition results obtained in the acquisition step. The computational quantum circuit 5 is configured to allow an operational quantum circuit to act on the computational qubits 321 and the ancillary bits 322. The operational quantum circuit is configured to act on the n computational qubits 321 corresponding to the input state |ψ> and includes unitary gate operations corresponding respectively to the assigned ancillary bits 322. Each unitary gate operation is configured to use one of a plurality of different ancillary bits 322 as a control bit, the computational qubits 321 as target bits, and to change the mode of action on the computational qubits 321 depending on the state of the ancillary bit 322. In an output step, the state of the computational qubits 321 is output as a calculation result based on the observation results of the ancillary bits 322.

Furthermore, the generation unit 233 may generate the computational quantum circuit 5 that further includes an observation operation 55. In this case, for example, the computational quantum circuit 5 is configured to further perform an observation operation 55 on at least one of the plurality of ancillary bits 322 after allowing the operational quantum circuit to act on the computational qubits 321 and the ancillary bits 322. The observation operation 55 is configured to observe the state of the ancillary bits 322 that function as control bits of the unitary gate operations.

The above information processing system 1 may be realized by a program that causes a computer to function as the information processing system 1. The program may be downloadable from a server, the program may be executed or distributed on a cloud computer, or such a program may be distributed by storing it on a non-volatile or volatile storage medium.

The processor 23 does not have to have the above quantum computation by the computational quantum circuit 5 performed using the quantum computer 3 in reality. For example, the processor 23 may convert the quantum computation algorithm specified by the generated computational quantum circuit 5 into a computation algorithm that can be executed by a classical computer, and then allow the classical computer to execute the computation algorithm. For example, the processor 23 may convert the quantum operation represented by the computational quantum circuit 5 into a computational algorithm that can be performed by a classical computer by replacing it with a matrix computation problem.

Some of the processing of the processor 23 may be converted into a computational algorithm that can be executed by a quantum computer and then have the quantum computer 3 execute the computational algorithm.

The quantum computer 3 may function as a quantum measurement apparatus. Each of the above information processing can constitute a technical idea by itself. For example, the above-mentioned information processing is also applicable when performing any information processing that can be processed using quantum algorithms such as processing other than processing for obtaining calculation results related to physical phenomena, such as calculation results for a combinatorial optimization problem or the traveling salesman problem. In other words, the above-described information processing is applicable to any problem that can be mathematically described as a Hamiltonian (for example, an eigenvalue problem of a Hamiltonian).

Some of the processing of the processor 23 may be converted into a computational algorithm that can be executed by a quantum computer and then have the quantum computer 3 execute the computational algorithm.

The quantum computer 3 may function as a quantum measurement apparatus. For example, in this case, the computational quantum circuit 5 may be used as a unitary operation for initial state generation. In other words, the computational quantum circuit 5 may be configured to represent a quantum algorithm executed by at least one quantum measurement device. According to such a configuration, for example, when the quantum measurement device is configured to use a specific state of a Hamiltonian (for example, a ground state) as a probe state for quantum measurement, the computational quantum circuit 5 may be configured to repeatedly execute operations based on a Hamiltonian H such that the specific state becomes an eigenstate, thereby outputting the specific state based on the input state |ψ>. According to such a configuration, it is possible to perform measurements that are more robust against quantum measurement noise.

The information processing apparatus 2 may be a classical or quantum computer, or a combination of the two.

The above information processing system 1 can be applied to various types of information processing related to quantum computation, such as quantum measurement and quantum communication.

The aspect of the above embodiments is not limited to the information processing system 1, but may be an information processing method or an information processing program. The information processing method includes each step of the information processing system 1. The information processing program causes at least one computer to perform each step of the information processing system 1.

The above information processing system 1 and the like may be provided in each of the following aspects.

    (1) An information processing method, comprising each step including: an acquisition step of acquiring information related to an input state represented by n computational qubits, information related to a Hamiltonian, and a number of repetitions K of an operation based on the Hamiltonian, the K being an integer of 2 or more; an assignment step of assigning a plurality of ancillary bits depending on the number of repetitions K, each state of the n computational qubits and the ancillary bits being configured to be represented by using at least a first state and a second state which are observable; and a generation step of generating a computational quantum circuit based on an acquisition result obtained in the acquisition step, the computational quantum circuit being configured to allow a first reflection operation, a first operational quantum circuit, a second reflection operation, and a second operational quantum circuit to sequentially act, the first reflection operation being configured to act on the ancillary bits so as to change a phase of a first reflection state, which is one of components of the first state or the second state included in each of the ancillary bits, the first operational quantum circuit being configured to act on the n computational qubits corresponding to the input state and including unitary gate operations corresponding respectively to the ancillary bits, each of the unitary gate operations being configured to use one of the different ancillary bits as a control bit and the computational qubits as target bits, and to change a mode of action on the computational qubits depending on a state of the ancillary bits, the second reflection operation being configured to act on the computational qubits and the ancillary bits so as to change a phase of a second reflection state, which is one of components of the first state or the second state included in each of the computational qubits and the ancillary bits, the second operational quantum circuit being configured to be converted into a Hermitian conjugate circuit of the first operational quantum circuit by using a predetermined unitary gate operation.

According to such a configuration, quantum amplitude amplification can be performed while at least one different ancillary bit is assigned to each step of the time evolution. Therefore, compared with the case where the operation and quantum amplitude amplification are repeatedly performed using a single ancillary bit, it is possible to suppress the increase in the depth of the quantum circuit that accompanies the increase in the number of repetitions. Accordingly, quantum acceleration can be promoted.

(2) The information processing method according to (1), wherein: the computational quantum circuit includes a reference circuit configured to act on the computational qubits, and the reference circuit is configured to output the input state based on a state of the initialized computational qubits.

According to such a configuration, by setting an appropriate input state in advance for the Hamiltonian, it is possible to obtain a highly accurate computational result with a smaller number of operations.

(3) The information processing method according to (1) or (2), wherein: the computational quantum circuit further includes an observation operation, the observation operation is configured to observe a state of each of the ancillary bits that functions as a control bit of the unitary gate operation, and the each step further includes an output step of outputting a state of the computational qubits as a calculation result based on an observation result of the ancillary bits.

According to such a configuration, a final state in which the time evolution by each time evolution gate operation has been properly performed can be output as a calculation result.

(4) The information processing method according to any one of (1) to (3), wherein: the state of the ancillary bits included in the first reflection state and the state of the ancillary bits included in the second reflection state are common, and the second operational quantum circuit is configured to be Hermitian conjugate of the first operational quantum circuit.

According to such a configuration, the computational quantum circuit can be further simplified, and the number of operations included in the computational quantum circuit can be reduced.

(5) The information processing method according to any one of (1) to (4), wherein: the first reflection operation has a phase that is inverted with respect to a phase of the second reflection operation.

According to such a configuration, quantum acceleration can be further enhanced by performing phase matching.

(6) The information processing method according to any one of (1) to (5), wherein: the operation is a probabilistic operation configured to represent whether or not the operation succeeds depending on the state of the ancillary bits.

(7) The information processing method according to any one of (1) to (6), wherein: each of the unitary gate operations is configured to allow either a unitary operation or a Hermitian conjugate operation of the unitary operation to act on the computational qubits depending on the state of the ancillary bits, and the unitary operation is configured to correspond to performing the operation once.

(8) An information processing method, comprising each step including: an acquisition step of acquiring information related to an input state represented by n computational qubits, information related to a Hamiltonian, and a number of repetitions K of an operation based on the Hamiltonian, the K being an integer of 2 or more; an assignment step of assigning a plurality of ancillary bits depending on the number of repetitions K; a generation step of generating a computational quantum circuit based on an acquisition result obtained in the acquisition step, the computational quantum circuit being configured to allow an operational quantum circuit to act on the computational qubits and the ancillary bits, the operational quantum circuit being configured to act on the n computational qubits corresponding to the input state and including unitary gate operations corresponding respectively to the assigned ancillary bits, each of the unitary gate operations being configured to use one of the different ancillary bits as a control bit and the computational qubits as target bits, and to change a mode of action on the computational qubits depending on a state of the ancillary bits; and an output step of outputting a state of the computational qubits as a calculation result based on an observation result of the ancillary bits.

(9) The information processing method according to (8), wherein: the computational quantum circuit is configured to further perform an observation operation on at least one of the ancillary bits after allowing the operational quantum circuit to act on the computational qubits and the ancillary bits, and the observation operation is configured to observe the state of the ancillary bits that function as control bits of the unitary gate operations.

(10) A computational quantum circuit configured to: repeatedly perform, K times, an operation based on a Hamiltonian on an input state represented by n computational qubits, the K being an integer of 2 or more; and act on the n computational qubits and a plurality of ancillary bits depending on the K, each state of the computational qubits and the ancillary bits being configured to be represented by using at least a first state and a second state which are observable; the computational quantum circuit being configured to allow a first reflection operation, a first operational quantum circuit, a second reflection operation, and a second operational quantum circuit to sequentially act, the first reflection operation being configured to act on the ancillary bits so as to change a phase of a first reflection state, which is one of components of the first state or the second state included in each of the ancillary bits, the first operational quantum circuit being configured to act on the n computational qubits corresponding to the input state and including unitary gate operations corresponding respectively to the ancillary bits, each of the unitary gate operations being configured to use one of the different ancillary bits as a control bit and the computational qubits as target bits, and to change a mode of action on the computational qubits depending on a state of the ancillary bits, the second reflection operation being configured to act on the computational qubits and the ancillary bits so as to change a phase of a second reflection state, which is one of components of the first state or the second state included in each of the computational qubits and the ancillary bits, the second operational quantum circuit being configured to be converted into a Hermitian conjugate circuit of the first operational quantum circuit by using a predetermined unitary gate operation.

According to such a configuration, quantum amplitude amplification can be performed while at least one different ancillary bit is assigned to each step of the time evolution. Therefore, compared with the case where quantum amplitude amplification is performed using a single ancillary bit, it is possible to suppress the increase in the depth of the quantum circuit that accompanies the increase in the number of repetitions. Accordingly, quantum acceleration can be promoted.

(11) A generation method of a computational quantum circuit according to (10), comprising: an acquisition step of acquiring information related to the input state, information related to the Hamiltonian, and a number of repetitions of an operation based on the Hamiltonian, the number of repetitions corresponding to K, which is a number of times the unitary gate operation is performed; an assignment step of assigning the ancillary bits corresponding to the number of repetitions; and a generation step of generating a computational quantum circuit configured to allow the operation to repeatedly act on the computational qubits, based on an acquisition result obtained in the acquisition step.

According to such a configuration, quantum amplitude amplification can be performed while at least one different ancillary bit is assigned to each step of the time evolution. Therefore, compared with the case where quantum amplitude amplification is performed using a single ancillary bit, it is possible to suppress the increase in the depth of the quantum circuit that accompanies the increase in the number of repetitions. Accordingly, quantum acceleration can be promoted.

(12) An information processing system including at least one apparatus, comprising: at least one processor configured to execute a program so as to execute each step of the information processing method according to any one of (1) to (9).

According to such a configuration, quantum amplitude amplification can be performed while at least one different ancillary bit is assigned to each step of the time evolution. Therefore, compared with the case where quantum amplitude amplification is performed using a single ancillary bit, it is possible to suppress the increase in the depth of the quantum circuit that accompanies the increase in the number of repetitions. Accordingly, quantum acceleration can be promoted.

(13) A program that allows at least one computer to execute each step of the information processing method according to any one of (1) to (9).

According to such a configuration, quantum amplitude amplification can be performed while at least one different ancillary bit is assigned to each step of the time evolution. Therefore, compared with the case where quantum amplitude amplification is performed using a single ancillary bit, it is possible to suppress the increase in the depth of the quantum circuit that accompanies the increase in the number of repetitions. Accordingly, quantum acceleration can be promoted.

Of course, the present disclosure is not limited to the above aspects.

Finally, various embodiments of the present disclosure have been described, but these are presented as examples and are not intended to limit the scope of the invention. Novel embodiments can be implemented in various other forms, and various omissions, replacements, and modifications can be made within the scope of the spirit of the invention.

The embodiment and its modifications are included in the scope and the spirit of the invention and are included in the scope of the invention described in claims and the equivalent scope thereof.

REFERENCE SIGNS LIST

1: Information processing system
2: Information processing apparatus
20: Communication bus
21: Communication unit
22: Storage unit
23: Processor
231: Acquisition unit
232: Assignment unit
233: Generation unit
234: Quantum manipulation unit
235: Output unit
3: Quantum computer
30: Communication bus
31: Communication unit
32: Quantum memory
320: Qubit
321: Computational qubit
322: Ancillary bit
33: Quantum processor
4: User terminal
40: Communication bus
41: Communication unit
42: Memory
43: Processor
44: Display unit
45: Input unit
5: Computational quantum circuit
51: First reflection operation
52: First operational quantum circuit
521: Input transformation operation
522: Unitary gate operation
523: Output transformation operation
524: Reference circuit
53: Second reflection operation
54: Second operational quantum circuit
541: Input transformation operation
542: Unitary gate operation
543: Output transformation operation
544: Reference circuit
55: Observation operation
5a: Computational quantum circuit
52a: First operational quantum circuit
521a: Input transformation operation
522a: Unitary gate operation
523a: Output transformation operation
54a: Second operational quantum circuit
541a: Input transformation operation
542a: Unitary gate operation
543a: Output transformation operation
QC1: Quantum circuit
QC2: Quantum circuit

P: Phase gate operation
$R_Z$: z-rotation gate operation
$S_0$: Zero reflection
$S_x$: Oracle operation

**Claims**

1. An information processing method, comprising each step including:

    an acquisition step of acquiring information related to an input state represented by n computational qubits, information related to a Hamiltonian, and a number of repetitions K of an operation based on the Hamiltonian, the K being an integer of 2 or more;
    an assignment step of assigning a plurality of ancillary bits depending on the number of repetitions K, each state of the n computational qubits and the ancillary bits being configured to be represented by using at least a first state and a second state which are observable; and
    a generation step of generating a computational quantum circuit based on an acquisition result obtained in the acquisition step,

        the computational quantum circuit being configured to allow a first reflection operation, a first operational quantum circuit, a second reflection operation, and a second operational quantum circuit to sequentially act, the first reflection operation being configured to act on the ancillary bits so as to change a phase of a first reflection state, which is one of components of the first state or the second state included in each of the ancillary bits,
        the first operational quantum circuit being configured to act on the n computational qubits corresponding to the input state and including unitary gate operations corresponding respectively to the ancillary bits,
        each of the unitary gate operations being configured to use one of the different ancillary bits as a control bit and the computational qubits as target bits, and to change a mode of action on the computational qubits depending on a state of the ancillary bits,
        the second reflection operation being configured to act on the computational qubits and the ancillary bits so as to change a phase of a second reflection state, which is one of components of the first state or the second state included in each of the computational qubits and the ancillary bits,
        the second operational quantum circuit being configured to be converted into a Hermitian conjugate circuit of the first operational quantum circuit by using a predetermined unitary gate operation.

2. The information processing method according to claim 1, wherein:
    the computational quantum circuit includes a reference circuit configured to act on the computational qubits, and the reference circuit is configured to output the input state based on a state of the initialized computational qubits.

3. The information processing method according to claim 1 or 2, wherein:

    the computational quantum circuit further includes an observation operation, the observation operation is configured to observe a state of each of the ancillary bits that functions as a control bit of the unitary gate operation, and
    the each step further includes an output step of outputting a state of the computational qubits as a calculation result based on an observation result of the ancillary bits.

4. The information processing method according to any one of claims 1 to 3, wherein:

    the state of the ancillary bits included in the first reflection state and the state of the ancillary bits included in the second reflection state are common, and
    the second operational quantum circuit is configured to be Hermitian conjugate of the first operational quantum circuit.

5. The information processing method according to any one of claims 1 to 4, wherein:
    the first reflection operation has a phase that is inverted with respect to a phase of the second reflection operation.

6. The information processing method according to any one of claims 1 to 5, wherein:

the operation is a probabilistic operation configured to represent whether or not the operation succeeds depending on the state of the ancillary bits.

7. The information processing method according to any one of claims 1 to 6, wherein:
each of the unitary gate operations is configured to allow either a unitary operation or a Hermitian conjugate operation of the unitary operation to act on the computational qubits depending on the state of the ancillary bits, and the unitary operation is configured to correspond to performing the operation once.

8. An information processing method, comprising each step including:

an acquisition step of acquiring information related to an input state represented by n computational qubits, information related to a Hamiltonian, and a number of repetitions K of an operation based on the Hamiltonian, the K being an integer of 2 or more;
an assignment step of assigning a plurality of ancillary bits depending on the number of repetitions K;
a generation step of generating a computational quantum circuit based on an acquisition result obtained in the acquisition step,

the computational quantum circuit being configured to allow an operational quantum circuit to act on the computational qubits and the ancillary bits,
the operational quantum circuit being configured to act on the n computational qubits corresponding to the input state and including unitary gate operations corresponding respectively to the assigned ancillary bits, each of the unitary gate operations being configured to use one of the different ancillary bits as a control bit and the computational qubits as target bits, and to change a mode of action on the computational qubits depending on a state of the ancillary bits; and

an output step of outputting a state of the computational qubits as a calculation result based on an observation result of the ancillary bits.

9. The information processing method according to claim 8, wherein:

the computational quantum circuit is configured to further perform an observation operation on at least one of the ancillary bits after allowing the operational quantum circuit to act on the computational qubits and the ancillary bits, and
the observation operation is configured to observe the state of the ancillary bits that function as control bits of the unitary gate operations.

10. A computational quantum circuit configured to:

repeatedly perform, K times, an operation based on a Hamiltonian on an input state represented by n computational qubits, the K being an integer of 2 or more; and
act on the n computational qubits and a plurality of ancillary bits depending on the K,
each state of the computational qubits and the ancillary bits being configured to be represented by using at least a first state and a second state which are observable;

the computational quantum circuit being configured to allow a first reflection operation, a first operational quantum circuit, a second reflection operation, and a second operational quantum circuit to sequentially act, the first reflection operation being configured to act on the ancillary bits so as to change a phase of a first reflection state, which is one of components of the first state or the second state included in each of the ancillary bits,
the first operational quantum circuit being configured to act on the n computational qubits corresponding to the input state and including unitary gate operations corresponding respectively to the ancillary bits, each of the unitary gate operations being configured to use one of the different ancillary bits as a control bit and the computational qubits as target bits, and to change a mode of action on the computational qubits depending on a state of the ancillary bits,
the second reflection operation being configured to act on the computational qubits and the ancillary bits so as to change a phase of a second reflection state, which is one of components of the first state or the second state included in each of the computational qubits and the ancillary bits,
the second operational quantum circuit being configured to be converted into a Hermitian conjugate circuit of the first operational quantum circuit by using a predetermined unitary gate operation.

11. A generation method of a computational quantum circuit according to claim 10, comprising:

an acquisition step of acquiring information related to the input state, information related to the Hamiltonian, and a number of repetitions of an operation based on the Hamiltonian, the number of repetitions corresponding to K, which is a number of times the unitary gate operation is performed;
an assignment step of assigning the ancillary bits corresponding to the number of repetitions; and
a generation step of generating a computational quantum circuit configured to allow the operation to repeatedly act on the computational qubits, based on an acquisition result obtained in the acquisition step.

12. An information processing system including at least one apparatus, comprising:
at least one processor configured to execute a program so as to execute each step of the information processing method according to any one of claims 1 to 9.

13. A program that allows at least one computer to execute each step of the information processing method according to any one of claims 1 to 9.

FIG. 1

FIG. 2

FIG. 3

FIG. 4

41          42          43          4

| COMMUNICATION UNIT | MEMORY | PROCESSOR |

| DISPLAY UNIT | INPUT UNIT |

USER TERMINAL

40          44          45

FIG. 5

23

PROCESSOR

| ACQUISITION UNIT | 231 |
| ASSIGNMENT UNIT | 232 |
| GENERATION UNIT | 233 |
| QUANTUM MANIPULATION UNIT | 234 |
| OUTPUT UNIT | 235 |

FIG. 6

QC1

322 |0⟩ —[H]—[W]—○——●——[$R_z(-2\theta_0)$]—[$W^\dagger$]—[📐]=

321 |ψ⟩ $\otimes n$ ⧸ ——[$U_{\mathrm{RTE}}$]—[$U_{\mathrm{RTE}}^\dagger$]——

FIG. 7

EP 4 738 206 A1

FIG. 8

FIG. 9

FIG. 10

```
                    ┌─────────────┐
                    │    START    │
                    └──────┬──────┘
                           │
    S1          ┌──────────▼──────────┐
                │ EXECUTE ACQUISITION │
                │     PROCESSING      │
                └──────────┬──────────┘
                           │
    S2          ┌──────────▼──────────┐
                │ EXECUTE ASSIGNMENT  │
                │     PROCESSING      │
                └──────────┬──────────┘
                           │
    S3          ┌──────────▼──────────┐
                │EXECUTE INITIALIZATION│
                │     PROCESSING      │
                └──────────┬──────────┘
                           │
    S4          ┌──────────▼──────────┐
                │ EXECUTE GENERATION  │
                │     PROCESSING      │
                └──────────┬──────────┘
                           │
    S5          ┌──────────▼──────────────┐
                │ EXECUTE QUANTUM OPERATION│◄─────────┐
                │  BASED ON COMPUTATIONAL  │          │
                │  QUANTUM CIRCUIT, ETC.   │          │
                └──────────┬───────────────┘          │
                           │                          │
    S6               ╱─────▼─────╲         NO          │
                    ╱ WHETHER OBSERVED╲──────────┐     │
                   ╱ STATE OF ANCILLARY╲         │     │
                   ╲ BIT SATISFY OUTPUT╱         │     │
                    ╲   CONDITION?    ╱          │     │
                     ╲───────┬───────╱           │     │
                        YES  │                   │     │
    S7          ┌────────────▼───┐  S8  ┌────────▼──────┐
                │ OUTPUT FINAL   │      │ DISCARD FINAL │
                │     STATE      │      │     STATE     │
                └────────┬───────┘      └───────┬───────┘
                         │                      │
            NO           │          S9     ╱────▼────╲
         ┌───────────────┼────────────────╱RECALCULATION╲
         │               │                 ╲           ╱
         │               │                  ╲────┬────╱
         │               │                  YES │
         │               │        S10  ┌────────▼──────┐
         │               │             │INITIALIZE QUBIT│
         │               │             └────────┬───────┘
    ┌────▼────┐          │                      │
    │   END   │◄─────────┘                      │
    └─────────┘                                 │
         └───────────────────────────────────────┘
```

FIG. 11

FIG. 12

FIG. 13

FIG. 14

FIG. 15

FIG. 16

EP 4 738 206 A1

## INTERNATIONAL SEARCH REPORT

| International application No. |
| --- |
| **PCT/JP2024/015812** |

| A. | CLASSIFICATION OF SUBJECT MATTER |
| --- | --- |

*G06N 10/60*(2022.01)i
FI:   G06N10/60

According to International Patent Classification (IPC) or to both national classification and IPC

| B. | FIELDS SEARCHED |
| --- | --- |

Minimum documentation searched (classification system followed by classification symbols)

G06N10/60

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2023/089930 A1 (QUEMIX INC.) 25 May 2023 (2023-05-25)<br>entire text, all drawings | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 June 2024** | **25 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/015812**

| Patent document cited in search report | Publication date (day/month/year) | Patent family member(s) | Publication date (day/month/year) |
|---|---|---|---|
| WO 2023/089930 A1 | 25 May 2023 | (Family: none) | |

Form PCT/ISA/210 (patent family annex) (July 2022)

**REFERENCES CITED IN THE DESCRIPTION**

**Patent documents cited in the description**

- JP 2015135377 A

**Non-patent literature cited in the description**

- **H. NISHI** ; **K. HAMADA** ; **Y. NISHIYA** ; **T. KOSUGI** ; **Y. ICHIRO MATSUSHITA**. Analyzing computational cost of probabilistic imaginary-time evolution method. *arXiv:2305.04600*, 2023